(19) Europäisches Patentamt
European Patent Office
Office européen des brevets

(11) **EP 3 390 991 B1**

(12) **EUROPEAN PATENT SPECIFICATION**

(45) Date of publication and mention
of the grant of the patent:
**07.07.2021  Bulletin 2021/27**

(51) Int Cl.:
*G01J 3/06* (2006.01)          *G01B 9/02* (2006.01)
*G01J 3/453* (2006.01)

(21) Application number: **16719673.2**

(22) Date of filing: **18.04.2016**

(86) International application number:
**PCT/US2016/028144**

(87) International publication number:
**WO 2017/105539 (22.06.2017 Gazette 2017/25)**

(54) **SELF CALIBRATION FOR MIRROR POSITIONING IN OPTICAL MEMS INTERFEROMETERS**

SELBSTKALIBRIERUNG FÜR EINE SPIEGELPOSITIONIERUNG BEI OPTISCHEN MEMS-INTERFEROMETERN

AUTO-ÉTALONNAGE DE POSITIONNEMENT DE MIROIR DANS DES INTERFÉROMÈTRES OPTIQUES DE MEMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2015   US 201562269866 P**
**15.04.2016   US 201615130876**

(43) Date of publication of application:
**24.10.2018   Bulletin 2018/43**

(73) Proprietor: **SI-Ware Systems**
**San Francisco, CA 94104 (US)**

(72) Inventors:
• **ANWAR, Momen**
**Cairo 11361 (EG)**
• **MEDHAT, Mostafa**
**Cairo 11351 (EG)**
• **MORTADA, Bassem**
**Cairo 11371 (EG)**
• **EL SHATER, Ahmed, Othman**
**Cairo 11586 (EG)**
• **GAD SEIF, Mina**
**Cairo 11251 (EG)**
• **NAGY, Muhammed**
**Cairo 11528 (EG)**
• **SAADANY, Bassam, A.**
**Cairo 11371 (EG)**
• **HAFEZ, Amr, N.**
**Cairo 11435 (EG)**

(74) Representative: **Cabinet Laurent & Charras**
**Le Contemporain**
**50 Chemin de la Bruyère**
**69574 Dardilly Cedex (FR)**

(56) References cited:
**US-A- 4 444 501     US-A1- 2014 139 839**

**Description**

**BACKGROUND OF THE INVENTION**

Technical Field of the Invention

The present disclosure relates in general to optical spectroscopy and interferometry, and in particular to the use of Micro Electro-Mechanical System (MEMS) technology in optical interferometers.

Description of Related Art

Micro Electro-Mechanical Systems (MEMS) refers to the integration of mechanical elements, sensors, actuators and electronics on a common silicon substrate through micro fabrication technology. For example, the microelectronics are typically fabricated using an integrated circuit (IC) process, while the micromechanical components are fabricated using compatible micromachining processes that selectively etch away parts of the silicon wafer or add new structural layers to form the mechanical and electromechanical components. MEMS devices are attractive candidates for use in spectroscopy, profilometry, environmental sensing, refractive index measurements (or material recognition), as well as several other sensor applications, due to their low cost, batch processing ability and compatibility with standard microelectronics. In addition, the small size of MEMS devices facilitates the integration of such MEMS devices into mobile and hand held devices.

Moreover, MEMS technology, with its numerous actuation techniques, enables the realization of new functions and features of photonic devices, such as optical tunability and dynamic sensing applications. For example, by using MEMS actuation (electrostatic, magnetic or thermal) to control a movable mirror of a Michelson Interferometer, small displacements in the interferometer optical path length can be introduced, and consequently, a differential phase between the interfering beams can be obtained. The resulting differential phase can be used to measure the spectral response of the interferometer beam (e.g., using Fourier Transform Spectroscopy), the velocity of the moving mirror (e.g., using the Doppler Effect), or simply as an optical phase delay element.

A key component in the accuracy of such interferometers is determining the position of the moveable mirror. Traditionally, a laser and auxiliary interferometer have been used to measure the moving mirror position. However, introducing a bulky laser source and additional interferometer increases the size, cost and complexity of the interferometer system. Prior art systems are disclosed in US2014/139839.

Therefore, there is a need for a mechanism to determine the moveable mirror position with reduced size, cost and complexity.

**SUMMARY OF THE INVENTION**

Embodiments of the present disclosure provide a Micro-Electro-Mechanical System (MEMS) apparatus for performing self-calibration of mirror positioning. The MEMS apparatus includes at least one mirror having a non-planar surface and a MEMS actuator having a variable capacitance that is coupled to a moveable mirror to cause a displacement thereof. The MEMS apparatus further includes a memory maintaining a table mapping stored capacitances of the MEMS actuator to respective stored positions of the moveable mirror and a capacitive sensing circuit coupled to the MEMS actuator for sensing the capacitance of the MEMS actuator at multiple reference positions of the moveable mirror corresponding to a center burst and one or more secondary bursts of an interferogram produced by the interferometer based on the non-planar surface. A calibration module uses the actuator capacitances at the reference positions to determine a correction amount to be applied to the stored capacitances.

The invention is defined by the appended claims.

**BRIEF DESCRIPTION OF THE DRAWINGS**

A more complete understanding of the present disclosure may be obtained by reference to the following detailed description when taken in conjunction with the accompanying drawings wherein:

FIG. 1 is a block diagram of an exemplary Micro Electro Mechanical System (MEMS) apparatus for determining the position of a moveable mirror in accordance with embodiments of the present disclosure;

FIG. 2 is a block diagram illustrating exemplary components of a MEMS interferometer system for determining the position of the moveable mirror in accordance with embodiments of the present disclosure;

FIG. 3 is a block diagram illustrating further exemplary components of the MEMS interferometer system in accordance with embodiments of the present disclosure;

FIG. 4 is a block diagram illustrating exemplary components of an application specific integrated circuit (ASIC) for use within the MEMS interferometer system, in accordance with embodiments of the present disclosure;

FIG. 5 is a circuit diagram illustrating an exemplary capacitance to voltage circuit for use within the ASIC of FIG. 4, in accordance with embodiments of the present disclosure;

FIG. 6 is a diagram illustrating an exemplary architecture of the MEMS apparatus, in accordance with embodiments of the present disclosure;

FIG. 7 is a diagram illustrating an exemplary architecture of the MEMS interferometer system, in accordance with embodiments of the present disclosure;

FIG. 8 is a diagram illustrating an exemplary MEMS die package, in accordance with the present disclosure;

FIG. 9 illustrates an exemplary method for determining the position of a moveable mirror within a MEMS apparatus, in accordance with embodiments of the present disclosure;

FIG. 10 is a block diagram illustrating an exemplary MEMS interferometer system for performing self-calibration of mirror positioning, in accordance with embodiments of the present disclosure;

FIGS. 11A and 11B are diagrams illustrating a capacitive sensing curve, in accordance with embodiments of the present disclosure;

FIGS. 12A and 12B are diagrams illustrating drift in the capacitive sensing curve, in accordance with embodiments of the present disclosure;

FIG. 13 is a diagram illustrating errors in the mirror position as a result of drift in the capacitive sensing curve, in accordance with embodiments of the present disclosure;

FIG. 14 is a block diagram illustrating exemplary components of a MEMS interferometer system for performing a correction technique to calibrate the mirror position, in accordance with embodiments of the present disclosure;

FIG. 15 is a diagram illustrating an interferogram of a white light source, in accordance with embodiments of the present disclosure;

FIG. 16 is a diagram illustrating an exemplary moveable mirror with a non-planar surface, in accordance with embodiments of the present disclosure;

FIG. 17 is a diagram illustrating an interferogram containing a center burst and secondary bursts produced using the moveable mirror shown in FIG. 16;

FIG. 18 is a schematic diagram illustrating another exemplary moveable mirror with a non-planar surface, in accordance with embodiments of the present disclosure;

FIG. 19A is a diagram illustrating an interferogram containing a center burst and secondary bursts produced using the moveable mirror shown in FIG. 18;

FIG. 19B is a diagram illustrating a window for removal of the Fabry-Perot effect of FIG. 19A;

FIG. 20 is a schematic diagram illustrating another exemplary moveable mirror with a non-planar surface, in accordance with embodiments of the present disclosure;

FIG. 21A is a diagram illustrating an interferogram containing a center burst and secondary bursts produced using the moveable mirror shown in FIG. 20;

FIG. 21B is a diagram illustrating a window for removal of the Fabry-Perot effect of FIG. 21A;

FIG. 22 illustrates a top view of an exemplary moveable mirror with a non-planar surface fabricated on a substrate, in accordance with embodiments of the present disclosure; and

FIG.23 illustrates an exemplary method for self-calibration for mirror positioning within an optical MEMS interferometer, in accordance with embodiments of the present disclosure.

## DETAILED DESCRIPTION OF THE DRAWINGS

In accordance with embodiments of the present disclosure, a self-calibration technique is provided to correct the position of a moveable mirror in Micro Electro-Mechanical System (MEMS) applications, such as interferometer/spectrometer applications. This technique enables the integration of the interferometer/spectrometer system on a small chip and reduces the cost and complexity of the system.

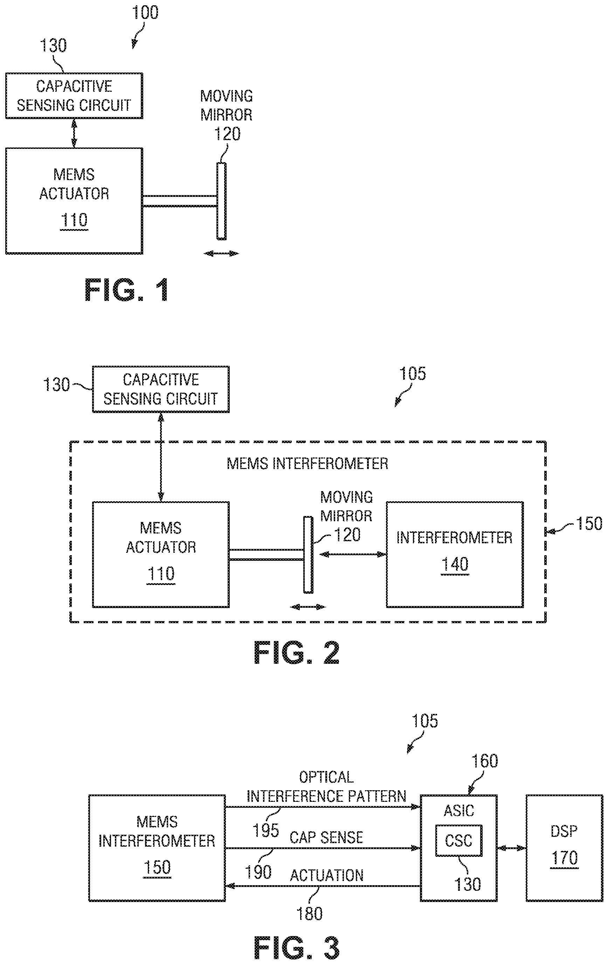

Referring now to FIG. 1, there is illustrated an exemplary MEMS apparatus 100, in accordance with embodiments of the present disclosure. The MEMS apparatus 100 includes a MEMS actuator 110 and a moveable mirror 120. The MEMS actuator 110 is an electrostatic actuator, such as a comb drive actuator, parallel plate actuator or other type of electrostatic actuator. The moveable mirror 120 is coupled to the MEMS actuator 110, such that motion of the MEMS actuator causes a displacement in the position of the moveable mirror 120.

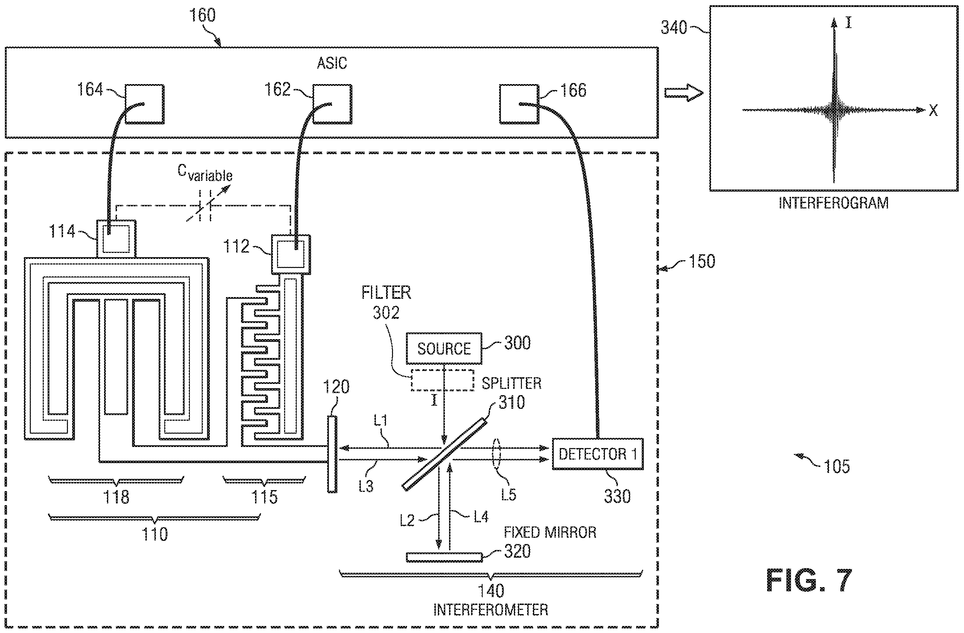

In many MEMS applications, it is necessary to have knowledge of the position of the moveable mirror 120. For example, in interferometer applications, the position of the moveable mirror 120 is used to process the output of the interferometer. An example of a MEMS interferometer system 105 is shown in FIG. 2. As can be seen in FIG. 2, the MEMS actuator 110 and moveable mirror 120, together with other components of an interferometer 140, such as a beam splitter, fixed mirror and photodetector (as described in more detail below in connection with FIG. 7) form a MEMS interferometer 150. The MEMS interferometer 150 may include, for example, a Fourier Transform Infrared Spectroscopy (FTIR) spectrometer, a Michelson interferometer, a Mach Zender interferometer and/or a Fabry-Perot interferometer.

The displacement of the moveable mirror 120 produces an optical path length difference between the two arms of the interferometer 140 in order to achieve the desired interference pattern at the photodetector. To effectively process the signal output from the photodetector, the position of the moveable mirror 120 in at least one plane must be ascertained.

Therefore, referring now to FIGS. 1 and 2, in order to measure the moveable mirror position, the MEMS apparatus 100 also includes a capacitive sensing circuit 130 coupled to the MEMS actuator 110. Since the MEMS actuator 110 is an electrostatic actuator, the MEMS actuator 110 has a variable capacitance that can be measured by the capacitive sensing circuit 130. For example, in one embodiment, the capacitive sensing circuit 130 can be coupled to the two plates of the MEMS actuator 110 to detect the capacitance between the plates (i.e., measure the current value of the capacitance, hereinafter referred to as the "current capacitance," of the MEMS actuator).

Based on the measured current capacitance, the position of the moveable mirror 120 can be determined. As can be appreciated, the separation (distance) between the two plates of the MEMS actuator 110 varies as the mirror 120 moves. Since the MEMS actuator 110 is an electrostatic actuator, the capacitance between the two plates is directly (or in some cases inversely) proportional to the separation between the two plates. As such, the capacitance between the plates can be used to determine this separation, which in turn can be used to determine the mirror position.

FIG. 3 is a block diagram illustrating exemplary components of the MEMS interferometer system 105 in accordance with embodiments of the present disclosure. In FIG. 3, the capacitive sensing circuit (CSC) 130 is implemented within an application specific integrated circuit (ASIC) 160. The ASIC 160 is further coupled to the MEMS interferometer 150 and to a digital signal processor (DSP) 170. In one embodiment, the DSP 170 is implemented on the ASIC 160. Integrating the DSP 170 on the ASIC 160 yields an attractive, self-contained solution that can be easily integrated in a larger system. However, this imposes restrictions on the ASIC technology selection and may result in interference between the digital part and the sensitive analog front end. Therefore, in other embodiments, the DSP 170 can be implemented on another ASIC or as software executable on a general-purpose personal computer.

The CSC 130 within the ASIC 160 is coupled to receive a capacitive sensing signal 190 from the MEMS actuator of the MEMS interferometer 150. The CSC 130 measures the capacitive sensing signal 190 to determine the current capacitance of the MEMS actuator and transmits the value of the current capacitance to the DSP 170. The DSP 170 processes the current capacitance value to determine the position of the moving mirror within the MEMS interferometer 150.

The ASIC 160 also includes circuitry for generating an actuation signal 180 and transmitting the actuation signal 180 to the MEMS actuator of the MEMS interferometer 150 to control movement of the MEMS actuator. For example, in an exemplary embodiment, the ASIC 160 includes a digital-to-analog converter (DAC) that supports any arbitrary actuation profile. The DAC may also be of very high resolution in order to reduce actuation noise and have a very high spurious-free dynamic range to ensure that unwanted resonance modes are not excited.

In addition, the ASIC 160 is further coupled to receive an optical interference pattern 195 output from the MEMS interferometer 150 and to provide the optical interference pattern 195 to the DSP 170 for processing. For example, in an exemplary embodiment, the MEMS interferometer system 105 is a MEMS FTIR spectrometer system that uses a general purpose MEMS-interface CMOS ASIC 160. In this embodiment, the MEMS interferometer 150 includes a photodetector, a fixed mirror and the moveable mirror. With the motion of the moveable mirror, the photodetector captures the optical interference pattern 195. The ASIC 160 may include a low-noise signal conditioning path that amplifies the signal, removes any dc offsets and provides necessary anti-aliasing filtering. The signal conditioning may be performed in a highly linear manner to reduce any spurious tones in the final output spectrum. At the DSP 170, spectrum analysis of the conditioned pattern with knowledge of the position of the moveable mirror can identify the light wavelength and the spectral print of any material in the light path.

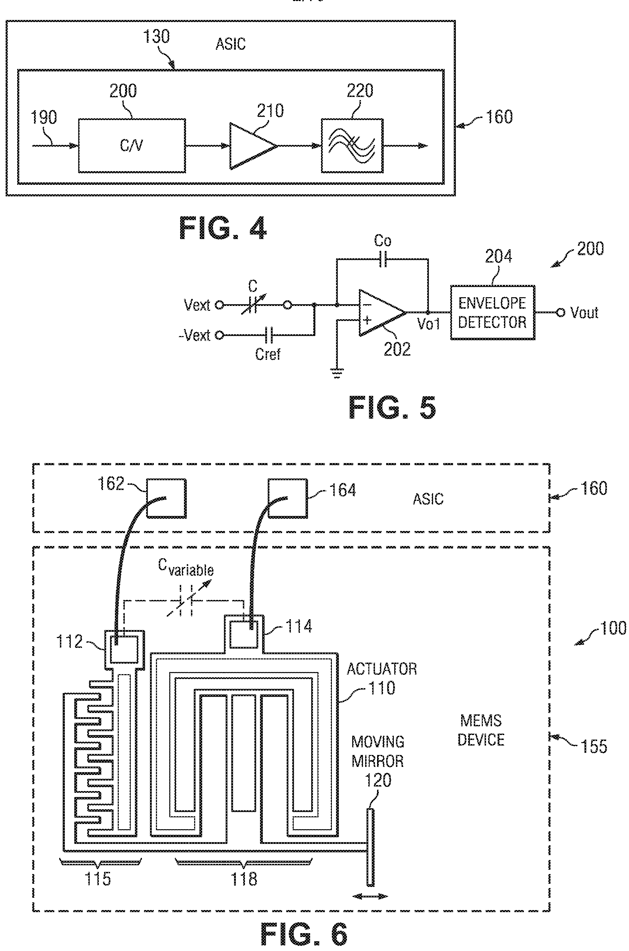

Referring now to FIG. 4, an exemplary CRC 130 is shown. The CRC 130 includes a capacitance-to-voltage converter (C/V) 200, amplifier 210 and low pass filter 220. The C/V 200 is coupled to receive the capacitive sensing signal 190 indicating the current capacitance of the MEMS actuator and operates to convert the current capacitance into a voltage. In particular, the C/V produces a voltage output proportional to the capacitance between the two terminals of the MEMS actuator. The amplifier 210 amplifies the voltage output from the C/V 200 and the low pass filter 220 filters the voltage to remove any spurious signals. In an exemplary embodiment, the C/V 200 is a very low noise C/V that has a wide range of gain and dc offset removal to support wide capacitance ranges superimposed on various fixed capacitances. Low noise levels are desired for the CRC 130, since the mirror position inaccuracy directly impacts the system signal-to-noise ratio (SNR). The ASIC 160 may also exhibit very low voltage and noise levels to allow for resolutions in excess of 18 bits. In further embodiments, the ASIC 160 may also include capacitance calibration circuitry to calibrate the C/V 200.

An example of a C/V 200 is shown in FIG. 5. The C/V 200 includes an input terminal for receiving a capacitance being measured C, an input terminal for receiving a reference capacitance Cref, an operational amplifier 202, a feedback capacitor Co and an Envelope Detector circuit 204. In an exemplary operation, an ac signal of known frequency (for example, 10 kHz) is applied to one terminal of capacitance C, while a negative version of the same excitation signal is applied to the reference capacitor Cref. The output of the operational amplifier 202 is an ac signal of the same frequency whose amplitude is proportional to the value (C-Cref).

The Envelope Detector circuit 204 detects the envelope of the output of the operational amplifier 202. In particular, the Envelope Detector circuit 204 operates to generate an output voltage proportional to the amplitude (envelope) of the ac signal output from the operational amplifier 202. As shown in FIG. 5, the Envelope Detector circuit 204 detects the envelope of signal Vo1 output from the operational amplifier 202 and produces a voltage Vout that is proportional to the value of the capacitance being measured. It should be understood other circuit designs for the C/V 200 are possible, and the present disclosure is not limited to any particular C/V circuit design. For example, in another embodiment, the C/V 200 may have multiple terminals to sense the difference in two capacitors, where the differential value is proportional to the mirror position.

FIG. 6 is a diagram illustrating an exemplary architecture of the MEMS apparatus 100, in accordance with embodiments of the present disclosure. The MEMS apparatus 100 includes the ASIC 160 and a MEMS device 155, such as a MEMS interferometer. The MEMS device 155 includes an electrostatic comb drive MEMS actuator 110 and a moveable mirror 120. The electrostatic comb drive MEMS actuator 110 shown in FIG. 6 is formed of a comb drive 115 and spring 118, each having a respective terminal 112 and 114. By applying a voltage to the comb drive 115 at terminal 112, a potential difference results across the actuator 110, which induces a capacitance therein, causing a driving force to be generated as well as a restoring force from the spring 118, thereby causing a displacement of moveable mirror 120 to the desired position. The induced capacitance Cvariable can be measured across terminals 112 and 114 by connecting terminals 112 and 114 to ports 162 and 164 on the ASIC 160.

In one embodiment, the actuation signal from ASIC 160 is transmitted over the same port (port 162) as the capacitance sensing signal using time or frequency division multiplexing. By having both functions (actuation and capacitive sensing) on a single port, the maximum actuation voltage necessary may be reduced, while also increasing the sensed capacitance. However, this may lead to undesired interaction between the sense and actuation circuitry. Therefore, in other embodiments, the actuation signal is sent over a different port (not shown) on the ASIC 160. It should be understood that the layout and features of the MEMS actuator 110 shown in FIG. 6 are merely exemplary, and that the invention can be realized with any electrostatic MEMS actuator design, whether a comb drive actuator, parallel plate actuator or other type of electrostatic MEMS actuator.

FIG. 7 is a diagram illustrating an exemplary architecture of the MEMS interferometer system 105, in accordance with embodiments of the present disclosure. The MEMS interferometer system 105 includes the MEMS interferometer 150 and ASIC 160. The MEMS interferometer 150 may be, for example, a Fourier Transform Infrared (FTIR) spectrometer that is realized over an SOI wafer to allow for a MEMS-actuated moving mirror.

The MEMS interferometer 150 includes the MEMS actuator 110 and interferometer 140. As shown in FIG. 7, the interferometer 140 includes a light source 300, beam splitter 310, fixed mirror 320, photodetector 330 and moveable mirror 120. The light source 300 produces an incident beam I that travels through the interferometer 140 until it reaches the half plane beam splitter 310. In an exemplary embodiment, the beam splitter 310 is formed at an interface between a first medium (i.e., silicon (Si)) and a second medium (i.e., air). The silicon/air interface beam splitter 310 is positioned at an angle (for example, 45 degrees) from the incident beam I. The desired angle may be produced, for example, by photolithographic ally defining a surface of the silicon medium.

Upon impinging the half plane beam splitter 310, the incident beam I is split into two interfering beams L1 and L2. L1 originates from the partial reflection of the incident beam I from the silicon/air half plane beam splitter 310, and thus has a reflection angle equal to the beam incidence angle. L2 originates from the partial transmission of the incident beam I through silicon/air half plane beam splitter 310 and propagates at least partially in silicon at a refraction angle (determined by Snell's law). As a result, L1 propagates towards the moveable mirror 120, while L2 propagates towards fixed mirror 320.

Beam L1 is reflected by moveable mirror 120, thus producing reflected beam L3, while beam L2 is reflected by fixed mirror 320, thus producing reflected beam L4. As shown in FIG. 7, both beams L3 and L4 take the same optical path of L1 and L2 respectively (in the opposite direction) after reflection from mirrors 120 and 320 respectively, back towards the half plane beam splitter 310. Thus, in embodiments in which the spectrometer/interferometer is used as a Fourier Transform (FT) spectrometer, one interferometer arm is formed by beams L1/L3 and includes the beam splitter 310 and moveable mirror 120, while another interferometer arm is formed by beams L2/L4 and includes fixed mirror 320.

An interference pattern L5 is produced from reflected beams L3 and L4 interfering at the beam splitter 310. The interference pattern L5 is detected by detector 330. The output of the detector 330 is input to the ASIC 160 via terminal 166. In one embodiment, the detector 330 includes a photodetector that is assembled through micromachining in the substrate (e.g., by etching the top surface of the substrate to realize an opening within which the photodetector may be placed) or that is realized monolithically within the substrate either through doping (e.g., to realize a P-I-N diode) or partial metallization (e.g., to realize metal-semiconductor-metal MSM photodetector).

As also shown in FIG. 7, moveable mirror 120 is movable using a SOI electrostatic MEMS actuator 110. As in FIG. 6, the electrostatic MEMS actuator 110 is shown formed of a comb drive 115 and spring 118. A voltage can be applied to the comb drive 114 via terminal 114, thereby inducing a capacitance across terminals 112 and 114 and causing a displacement of the moveable mirror 120 to the desired position for reflection of the beam L1. As such, an optical path length difference (OPD) between beams L3 and L4 can be achieved that is substantially equal to twice the mirror displacement.

In addition, the capacitance across terminals 112 and 114 can be measured by the ASIC 160 via ports 162 and 164 to determine the position of the moveable mirror 120. Based on the determined moveable mirror position and the output of the detector 330, an interferogram 340 can be produced (e.g., by the DSP 170 shown in FIG. 3) to identify the light wavelength and the spectral print of any material in the light path.

The moveable mirror 120 in FIG. 7 is shown positioned at the zero path difference between the two optical paths (L1/L3 and L2/L4). However, in other embodiments, to remove phase noise and errors produced as a result of the capacitive sensing technique, the moveable mirror 120 can be positioned at a distance $\delta$ behind the zero path position, and the moveable mirror 120 can be moved through the zero path position such that measurements are taken on both the positive and negative sides of the zero path position. In this embodiment, the source 300 is a wide band source (i.e., white light source) and the negative and positive sides may be equal or not equal. At the DSP 170 (shown in FIG. 3), the complex Fourier transform of the interferogram 340 can be taken to compensate for any phase errors in the mirror position. In another embodiment, instead of recording both the positive and negative sides of the interferogram, only a small part of the interferogram on the negative (left) side may be taken and used by the DSP to extract the correct signal and remove some of the phase noise and errors produced by the capacitive sensing technique. In another embodiment, the source 300 is a narrow band source (i.e., a laser) producing an input beam of known wavelength. In yet another embodiment, the source 300 is a wide band source and a narrow band optical filter 302 may optionally be used to produce an input beam of known central wavelength.

In one embodiment, mirrors 120 and 320 are metallic mirrors, where selective metallization (e.g. using a shadow mask during metallization step) is used to protect the beam splitter. In another embodiment, non-metallic vertical Bragg mirrors are used to obtain a small foot print spectrometer. The Bragg mirrors can be realized using Deep Reactive Ion Itching (DRIE), thus producing successive vertical silicon/air interfaces. In addition, the Bragg mirrors can be designed either to have a wide spectrum reflection response to act as simple reflectors or with a wavelength selective response, depending on the application.

Although a silicon/air interface is described herein for the beam splitter 310, other mediums providing a half wave plane beam splitter can be used to realize the invention. For example, in another exemplary embodiment, micromachined or assembled glass half-planes or other materials, such as Pyrex, can be used instead of silicon to allow for a wider spectral window of operation. In addition, other materials, such as liquids or different gases, can be used instead of air to provide a degree of freedom to modify the reflection coefficient of the half plane beam splitting interface.

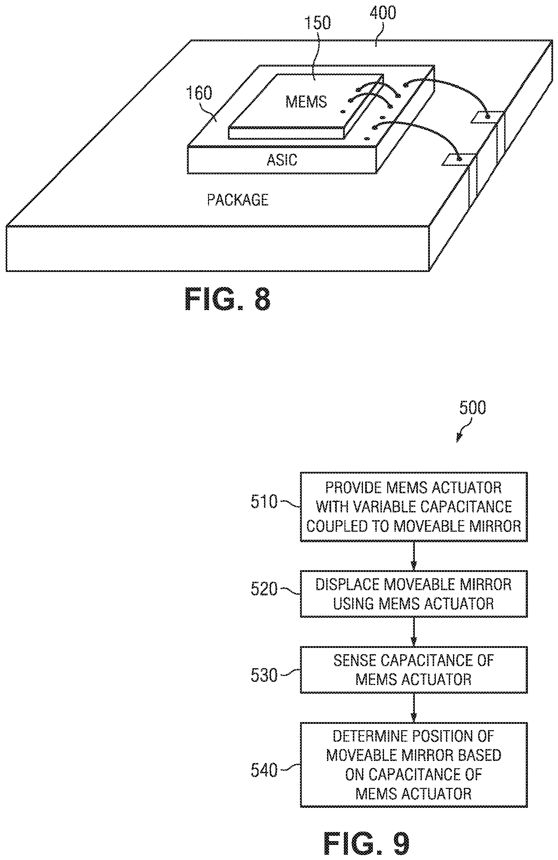

FIG. 8 is a diagram illustrating an exemplary MEMS die package 400, in accordance with the present disclosure. By using capacitive sensing to determine the position of the moveable mirror, the MEMS interferometer 150 can be integrated with the ASIC 160 chip together on the same MEMS die package 400, thereby reducing the size, cost and complexity of the MEMS system.

FIG. 9 illustrates an exemplary method 500 for determining the position of a moveable mirror within a MEMS apparatus, in accordance with embodiments of the present disclosure. The method begins at 510, where an electrostatic MEMS actuator having a variable capacitance is provided coupled to the moveable mirror. At 520, the moveable mirror is displaced using the MEMS actuator. Thereafter, at 530, a current capacitance of the MEMS actuator is sensed, and at 540, the position of the moveable mirror is determined based on the current capacitance of the MEMS actuator.

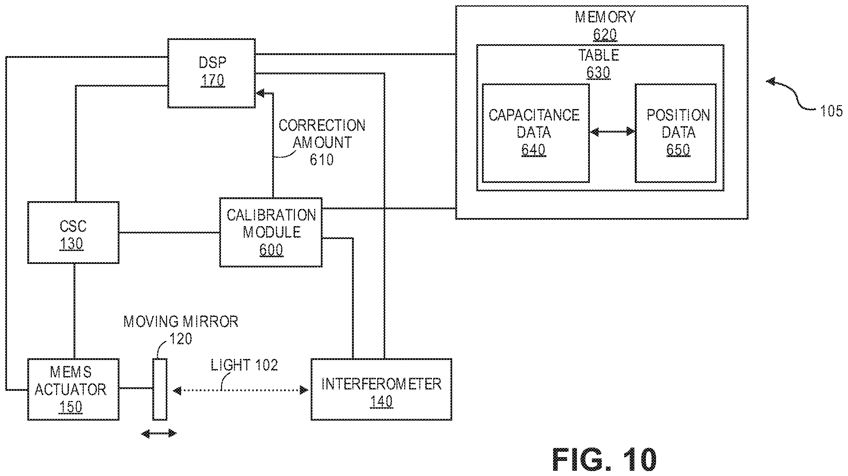

Referring now to FIG. 10, in some embodiments, the capacitive sensing circuit may suffer from performance drifts due to stress, temperature, humidity, normal drift of electronic components, as well as other reasons. Such drift in the capacitive sensing circuit affects the accuracy of the position of the moveable mirror, which directly affects the spectrometer/interferometer operation. Therefore, as shown in FIG. 10, a calibration module 600 can be included in the MEMS interferometer 105 to calibrate the capacitive sensing circuit (CSC) 130 used for the determination of optical path difference modulation. In one embodiment, the calibration module 600 is an algorithm executable by the DSP 170 and may be stored, for example, in memory 620. In another embodiment, the calibration module 600 is included within the ASIC of the CSC 130, or within an additional ASIC.

As discussed above, the movable mirror 120 introduces an optical path difference in one path of the interferometer 140 leading to an output interferogram from which spectrum can be extracted by Fourier transform as indicated in Equations 1 and 2 below.

$$I(x) = \int_{-\infty}^{\infty} B(v)\cos(2\pi vx)\, dv \qquad \text{(Equation 1)}$$

$$B(v) = \int_{-\infty}^{\infty} I(x) \cos(2\pi vx)\, dx \qquad \text{(Equation 2)}$$

In order to obtain accurate spectra, a precise determination of the optical path difference (OPD) due to the movable mirror displacement is needed. The accuracy of the OPD is initially calibrated using the CSC 130, as discussed above, to capacitively sense motion of the MEMS actuator 150 as the moving mirror 120 is moved through the full range of motion. The resulting measured capacitances (capacitance data 640) are mapped to the corresponding OPD (position data 650), and then can be stored within a table 630 in a memory 620.

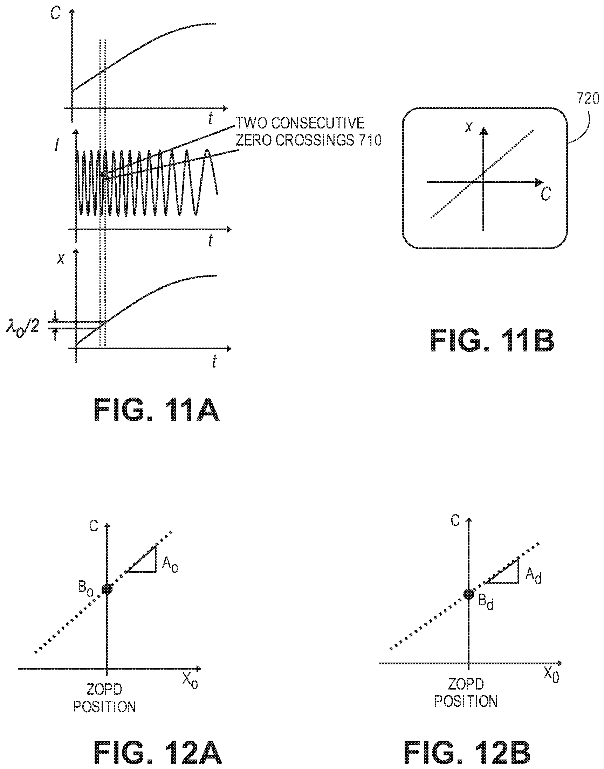

For example, a light beam 102 of a certain known wavelength $\lambda_o$ can be injected into the MEMS interferometer 105 to calibrate the CSC 130 on the production line once for each spectrometer sample. The light beam 102 may be produced from a light source (e.g., a laser) having a known wavelength or from a wideband light source whose white light output is passed through a narrow band optical filter to produce the light beam 102 at the known wavelength. As can be seen in FIGS. 11A and 11B, the capacitance to OPD relation is determined using the fact that two consecutive peaks of the resulting interferogram represents an OPD of $\lambda_o$ and mapping this to the measured capacitance variation to produce a capacitive sensing curve 720, as follows:

$$I(x) = I_o(v_o)\cos\left(2\pi\frac{x}{\lambda_o}\right) \qquad \text{(Equation 3)}$$

where the distance ($\Delta x$) between two consecutive zero crossings 710 is equal to $\lambda_o/2$.

Referring again to FIG. 10, the capacitive sensing curve 720 of FIG. 11B can be used to populate the look-up table 620 of C (capacitance data 640) to x (position data 650) relation, which can then be used to determine the position of the moveable mirror 120 during subsequent operations of the MEMS interferometer 105. For example, during a subsequent operation of MEMS interferometer 105, the capacitance across the MEMS actuator 150 can be measured by the CSC 130, and the measured capacitance can be provided to the DSP 170 to determine the position of the moveable mirror 120 by accessing the table 630 in memory 620.

In addition, as shown in FIG. 10, to compensate for any drift in the CSC 130, the calibration module 600 can further determine a correction amount 610 and provide this correction amount 610 to the DSP 170. The DSP 170 can use the correction amount 610 and the measured capacitance provided by the CSC 130 to determine a corrected capacitance, and then use the corrected capacitance to determine the correct mirror position by performing a table 630 look-up of the corrected capacitance. Based on the correct moveable mirror position and the output of the interferometer 140, the DSP 170 can then produce an interferogram to identify the light wavelength and the spectral print of any material in the light path. Furthermore, the DSP 170 and/or ASIC containing the CSC 130 can generate an actuation signal to control movement of the MEMS actuator 150 to move the mirror 120 to a desired position using the correction amount 610.

In an exemplary embodiment, the calibration module 600 determines the correction amount 610 by determining the actual capacitance of the MEMS actuator 150 at two or more known positions of the moveable mirror 120. For example, the calibration module 600 can compare the actual measured capacitances of the MEMS actuator 150 to corresponding respective capacitances within the table 630 at the two or more known positions to calculate respective errors between the measured actual capacitances and the corresponding capacitances within the table 630. The calibration module 600 can then extrapolate a corrected capacitance sensing curve using the initial capacitance sensing curve and the calculated errors and determine the correction amount 610 based on the difference between the corrected capacitance sensing curve and the initial capacitance sensing curve.

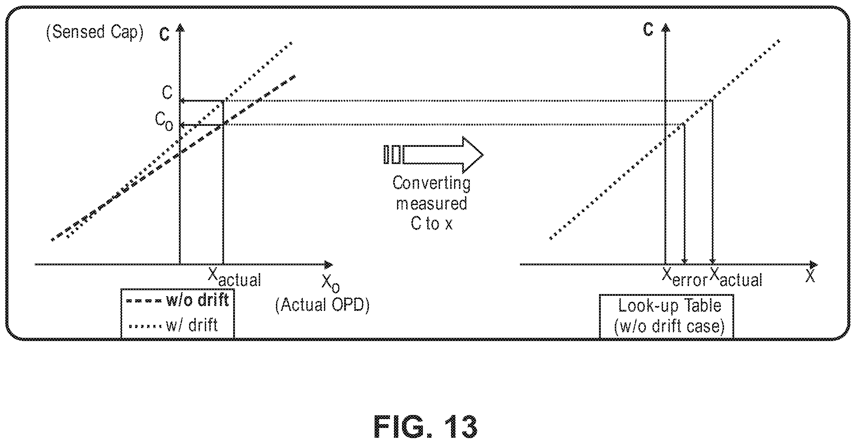

For example, as shown in FIGS. 12A and 12B, drifts in the initial capacitance values (stored in table 630 of FIG. 10) may occur in the form of offset error ($B_d$) and/or gain error ($A_d$). As can be seen in FIGS. 12A and 12B, the initial values stored in the table provide a capacitance value of $B_o$ at zero OPD with a gain of $A_o$. During a subsequent operation of the MEMS interferometer, drift in the CSC has occurred, such that the zero OPD corresponds to a capacitance value of $B_d$ and the gain is now $A_d$. As further shown in FIG. 13, when such drift is present, using the initial values mapping the capacitive sensing to OPD relation results in erroneous OPD values ($x_{error}$ as compared to $x_{actual}$), which can lead to wavelength errors and spectral shift. Therefore, an additional calibration of the initial capacitance values is needed to correct the capacitance/OPD values. The additional calibration produces a correction amount, as described above, which may include an offset error amount and/or gain error amount.

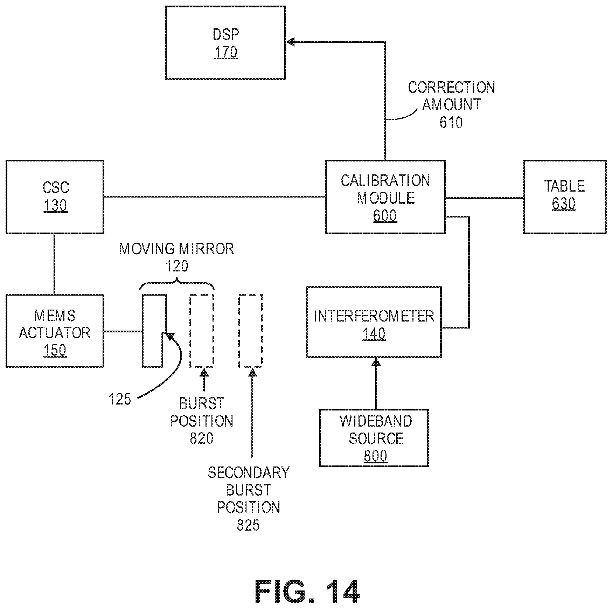

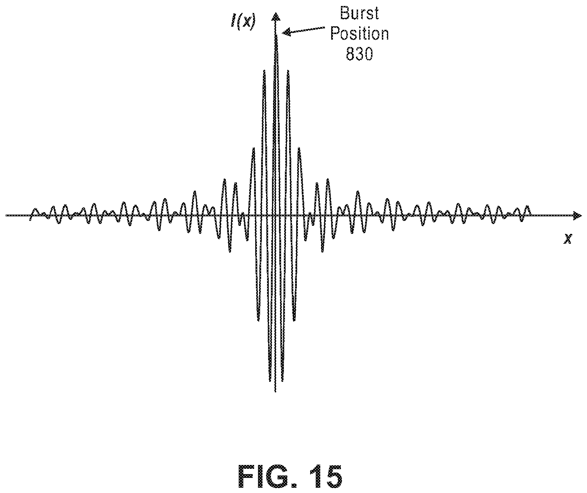

FIG. 14 illustrates exemplary components of a MEMS interferometer system for performing a correction technique to calibrate the mirror position. As shown in FIG. 14, a wideband light source 800 is used to self-calibrate the MEMS interferometer during calibration of the MEMS interferometer. The wide band light source 800 has a spectrum S(v) that is injected into the interferometer 140. The resulting white light interferogram, shown in FIG. 15, can be expressed as the following for a MEMS interferometer working within a wavenumber range from $v_1$ to $v_2$:

$$I_o(x) = \frac{1}{2}\int_{v_1}^{v_2} S(v)\cos(2\pi vx)\,dv = \frac{1}{4}\left[W_v\cos(2\pi v_0 x)\frac{\sin(\pi W_v x)}{\pi W_v x}\right] * s(x), \quad \text{(Equation 4)}$$

where

$$v_0 = \frac{v_1 + v_2}{2} \qquad\qquad \text{(Equation 5)}$$

$$W_v = v_1 - v_2 \qquad\qquad \text{(Equation 6)}$$

$$s(x) = Fourier\ Transform[S(v)] \qquad\qquad \text{(Equation 7)}$$

As can be seen in FIG. 15, the mirror position at the center burst 830 of the white light interferogram is irrespective of the source spectrum shape, which makes relying on that position more immune to source fluctuations and drift. Therefore, as shown in FIG. 14, the CSC 130 can continuously measure the capacitance of the MEMS actuator 150 while the white light interferogram is being obtained and provide the measured capacitance values to the calibration module 600. From the resulting interferogram provided by the interferometer 140, the calibration module 600 can determine the measured capacitance when the moving mirror 120 was at a burst position 820 corresponding to the center burst 830 and map that burst position 820 to zero OPD, which can be considered a first reference position for self-calibration.

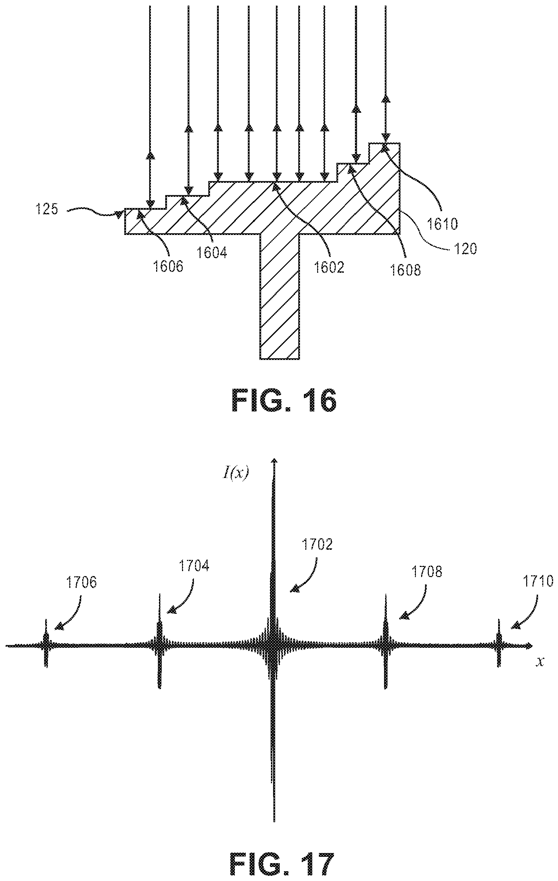

In addition, shaping a surface 125 of one of the mirrors, such as the moveable mirror 120, to be non-planar, as shown in FIGs. 14, 15, 18 and 20, can produce secondary bursts at multiple zero OPD reference points, as shown in FIGs. 17, 19A and 21A. For example, as can be seen in FIG. 14, the surface 125 of the mirror 120 may include a main surface and at least one additional surface offset from the main surface, where the main surface is centered on the mirror at an optical axis of the interferometer and is configured to produce the center burst of the interferogram, and the additional surface is located near an edge of the moveable mirror and is configured to produce the secondary burst of the interferogram.

The following discussion assumes the moveable mirror 120 has a non-planar surface 125. However, in other embodiments, another mirror in the optical path of the interferometer, such as the fixed mirror shown in FIG. 7, may have a non-planar surface in addition to or in place of the moveable mirror 120.

The calibration module 600 can determine the measured capacitance when the moving mirror was at a secondary burst position 825 corresponding to one of the secondary bursts and map that secondary burst position 825 to zero OPD for the offset surface and use this secondary burst position as another reference position. For example, with a known offset between a main surface producing the center burst 830 and an offset surface producing a secondary burst, the zero OPD position of the offset surface of the moveable mirror is equal to the sum of the zero OPD position of the main surface of the moveable mirror and the known offset. As another example, with a known OPD between the optical path taken via the main surface and the optical path taken via the offset surface, the zero OPD position corresponding to the offset surface of (or secondary burst produced by) the moveable mirror is equal to the sum of the zero OPD position of the main surface of the moveable mirror and the known OPD.

The resulting white light interferogram with multiple bursts can be expressed as the following for a MEMS interferometer:

$$I(x) = I_o(x) + A_1 I_o(x - OPD_1) + A_2 I_o(x - OPD_2) + A_3 I_o(x - OPD_3) + \cdots$$

$$\text{(Equation 8)}$$

where $A_1$, $A_2$, $A_3$... are the relative intensity of the secondary bursts to the main burst and $OPD_1$, $OPD_2$, $OPD_3$,.... are the optical path differences between the secondary bursts and the main (center) burst.

Using the measured capacitance at each of the reference positions and the initial capacitance and position values stored in the table 630, the calibration module 600 can determine the correction amount 610 to be applied by the DSP 170 to the capacitance sensing curve (values stored in table 630) during subsequent MEMS interferometer operations. Therefore, any capacitive sensing drifts in subsequent interferograms can be compensated for using the correction amount 610.

In embodiments in which the error in the capacitance measurements versus the position is linear, only two capacitance measurements at known mirror positions are needed to correct for drift errors in the C to x relation. In this embodiment, only two bursts (i.e., the center burst and one secondary burst) are needed in the interferogram to produce the corrected capacitance sensing curve.

Non-linear drift errors (third degree or higher) may also be corrected by structuring the non-planar surface 125 of the moveable mirror 120 to produce three or more bursts in the interferogram (i.e., the center burst and two or more secondary bursts). For example, as shown in FIG. 16, the surface 125 of moveable mirror 120 may have multiple offset steps to produce an interferogram with multiple bursts, as shown in FIG. 17. For example, the surface 125 may include a main surface 1602 centered at an optical axis of the interferometer and configured to produce a main/center burst 1702 of the interferogram, along with offset surfaces 1604, 1606, 1608 and 1610 offset from the main surface 1602 and configured to produce respective secondary bursts 1704, 1706, 1708 and 1710.

In particular, in the example shown in FIG. 16, the offset surfaces include a first offset surface 1604 adjacent to the main surface 1602 on a first end of the moveable mirror 120, in which the first offset surface 1604 has a first offset respective to the main surface 1602. The offset surfaces further include a second offset surface 1606 adjacent to the first offset surface 1604 on the first end of the moveable mirror, in which the second offset surface has a second offset respective to the main surface 1602. In FIG. 16, the second offset is greater than the first offset in a first direction such that the thickness of the moveable mirror 120 at the second offset surface 1606 is less than the thickness of the moveable mirror 120 at the first offset surface 1604 and the thickness of the moveable mirror 120 at the first offset surface 1604 is less than the thickness of the moveable mirror 120 at the main surface 1602.

The offset surfaces further include a third offset surface 1608 adjacent to the main surface 1602 on a second end of the moveable mirror 120 opposite the first end, in which the third offset surface 1608 has a third offset respective to the main surface 1602. In addition, the offset surfaces also include a fourth offset surface 1610 adjacent to the third offset surface 1608 on the second end of the moveable mirror, in which the fourth offset surface 1610 has a fourth offset respective to the main surface 1602. In FIG. 16, the fourth offset is greater than the third offset in a second direction such that the thickness of the moveable mirror 120 at the fourth offset surface 1610 is greater than the thickness of the moveable mirror 120 at the third offset surface 1608 and the thickness of the moveable mirror 120 at the third offset surface 1608 is greater than the thickness of the moveable mirror 120 at the main surface 1602. With the non-planar surface configuration shown in FIG. 16, the first offset surface 1604 is configured to produce secondary burst 1704, the second offset surface 1606 is configured to produce secondary burst 1706, the third offset surface 1608 is configured to produce secondary burst 1708 and the fourth offset surface 1610 is configured to produce secondary burst 1710 in the interferogram shown in FIG. 17.

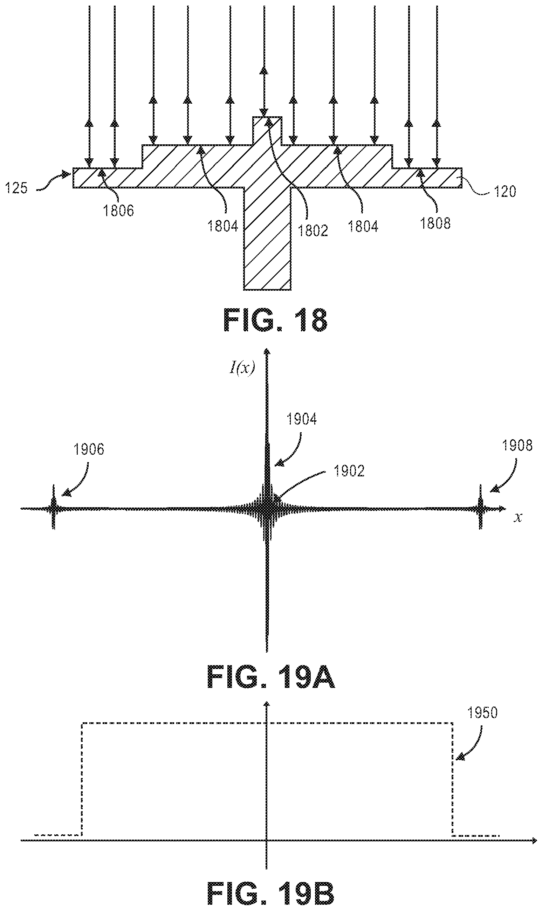

FIG. 18 is a schematic diagram illustrating another exemplary moveable mirror 120 with a non-planar surface 125 that includes multiple offset steps to produce an interferogram with multiple bursts, as shown in FIG. 19A. For example, the surface 125 may include a main surface 1804 configured to produce a main/center burst 1904 of the interferogram, along with offset surfaces 1802, 1806 and 1808 offset from the main surface 1804 and configured to produce respective secondary bursts 1902, 1906 and 1908.

In particular, in the example shown in FIG. 18, a first offset surface 1802 is centered on the moveable mirror 120 at an optical axis of the interferometer and is configured to produce secondary burst 1902 of the interferogram. The main surface 1804 is adjacent the first offset surface 1802 on either side thereof and is configured to produce the main/center burst 1904 of the interferogram. The first offset surface 1802 is offset from the main surface 1804 by a first offset amount in a first direction such that the thickness of the moveable mirror 120 at the main surface 1804 is less than the thickness of the moveable mirror 120 at the first offset surface 1802.

Second and third offset surfaces 1806 and 1808 are adjacent the main surface 1804 on either side thereof and are offset from the main surface 1804 by a second offset amount in a second direction such that the thickness of the moveable mirror 120 at the main surface 1804 is greater than the thickness of the moveable mirror 120 at the second/third offset surfaces 1806/1808.. The second offset surface 1806 is configured to produce secondary burst 1906 of the interferogram, while the third offset surface 1808 is configured to produce secondary burst 1908 of the interferogram. The Fabry Perot-like effect that can result from having multiple bursts on the spectrum can be removed by applying window 1950 to the interferogram, depending on the wanted resolution, as shown in FIG. 19B.

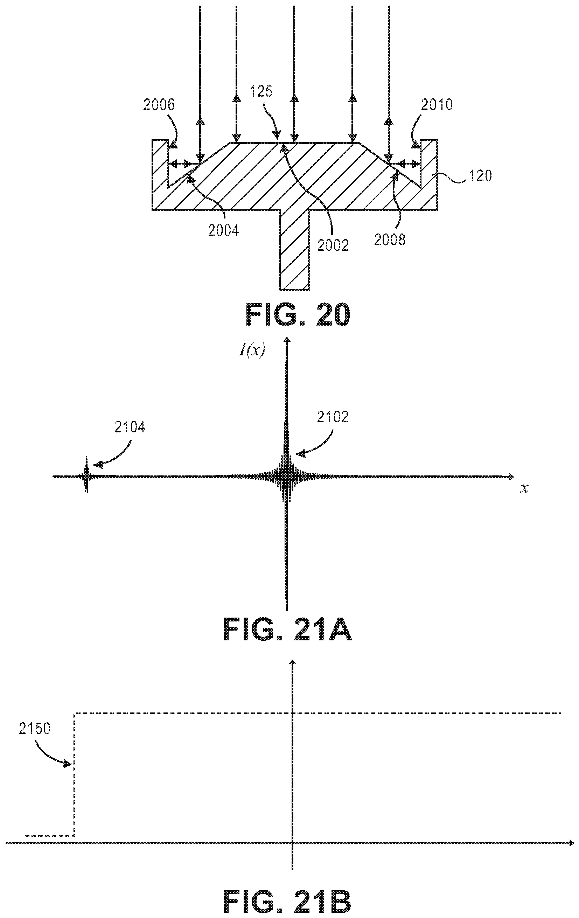

FIG. 20 is a schematic diagram illustrating another exemplary moveable mirror 120 with a non-planar surface 125 to produce an interferogram with multiple bursts, as shown in FIG. 21A. For example, the surface 125 may include a main surface 2002 configured to produce a main/center burst 2102 of the interferogram, along with additional surfaces 2004, 2006, 2008 and 2010 configured to produce secondary burst 2104.

In particular, in the example shown in FIG. 20, the additional surfaces include corresponding angled surfaces 2004 and 2008 on each side of the main surface 2002 and corresponding reflecting surfaces 2006 and 2010 on each side of the main surface 2002. The main surface 2002 is centered on the moveable mirror 120 at an optical axis of the interferometer and is configured to produce the center burst 2102 of the interferogram. The angled surfaces 2004 and 2008 are each positioned at a respective angle to the main surface 2002 and configured to reflect light off of a respective one of the reflecting surfaces 2006 and 2010 to produce the secondary burst 2104 of the interferogram. The Fabry Perot-like effect that can result from having multiple bursts on the spectrum can be removed by applying window 2150 to the interferogram, depending on the wanted resolution, as shown in FIG. 21B.

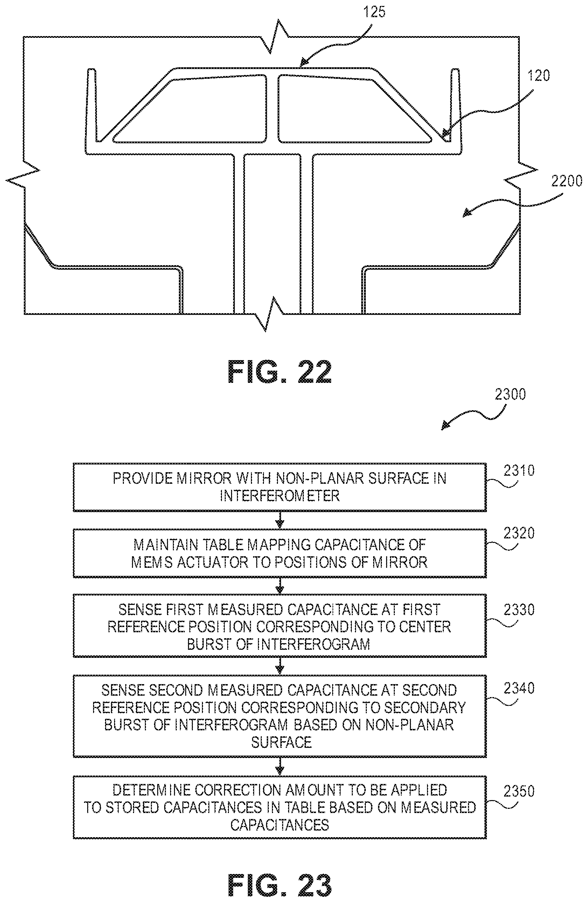

FIG. 22 illustrates a top view of an exemplary moveable mirror 120 with a non-planar surface 125 fabricated on a substrate 2200, in accordance with embodiments of the present disclosure. The surface 125 is similar to that shown in FIG. 20. In one example, the moveable mirror 120 (and other components of the MEMS interferometer system) can be fabricated by selective etching of a silicon-on-insulator (SOI) wafer (substrate 2200) using any type of isotropic and/or anisotropic etching technique, such as Deep Reactive Ion Etching (DRIE).

FIG. 23 illustrates an exemplary method 2300 for self-calibration for mirror positioning within an optical MEMS interferometer, in accordance with embodiments of the present disclosure. The method begins at 2310, where a mirror with a non-planar surface is provided in an interferometer. In one example, the mirror with the non-planar surface is the moveable mirror. In another example, the mirror with the non-planar surface is a fixed mirror or a combination of a fixed mirror and a moveable mirror (i.e., both the fixed mirror and the moveable mirror have respective non-planar surfaces).

At 2320, a table mapping stored capacitances of the MEMS actuator to respective stored positions of the moveable mirror is maintained. The stored capacitances and respective stored positions may be obtained during an initial calibration of the MEMS interferometer. At 2330, a first measured capacitance of the MEMS actuator is sensed at a first reference position of the moveable mirror corresponding to a center burst of an interferogram produced as a result of movement of the moveable mirror. At 2340, a second measured capacitance of the MEMS actuator is sensed at a second reference position of the moveable mirror corresponding to a secondary burst of the interferogram produced as a result of movement of the moveable mirror and the non-planar surface of the moveable mirror and/or fixed mirror. At 2350, a correction amount to be applied to the stored capacitances within the table is determined using the first measured capacitance at the first reference position and the second measured capacitance at the second reference position.

As will be recognized by those skilled in the art, the innovative concepts described in the present application can be modified and varied over a wide range of applications. Accordingly, the scope of patents subject matter should not be limited to any of the specific exemplary teachings discussed, but is instead defined by the following claims.

**Claims**

1. A Micro-Electro-Mechanical System (MEMS) apparatus, comprising;
   a MEMS interferometer (150) configured to produce an interferogram, the MEMS interferometer (150) comprising:

   at least one mirror optically coupled to receive and reflect light, a first mirror of the at least one mirror having a non-planar surface (125), the non-planar surface (125) comprising a main surface (1602, 1804, 2002) and at least one additional surface offset from the main surface (1602, 1804, 2002), wherein the main surface (1602, 1804, 2002) is centered on the first mirror (120) at an optical axis of the interferometer and is configured to produce a center burst (1702, 1904, 2102) of the interferogram, and wherein the at least one additional surface is located near an edge of the first mirror (120) and is configured to produce the secondary burst (1706, 1902, 2104) of the interferogram; and
   a MEMS actuator (110) coupled to a moveable mirror (120) of the at least one mirror to produce a displacement thereof, the MEMS actuator (110) having a variable capacitance;

   a memory (620) maintaining a table (630) mapping stored capacitances of the MEMS actuator (110) to respective stored positions of the moveable mirror (120);
   a capacitive sensing circuit (130) coupled to the MEMS actuator (110), the capacitive sensing circuit (130) being configured to:

   sense a first measured capacitance of the MEMS actuator (110) at a first reference position of the moveable mirror (120) corresponding to a center burst of the interferogram produced as a result of movement of the moveable mirror (120); and
   sense a second measured capacitance of the MEMS actuator (110) at a second reference position of the moveable mirror (120) corresponding to a secondary burst of the interferogram produced as a result of the moveable mirror (120) and the non-planar surface (125); and

   a calibration module (600) configured to use the first measured capacitance at the first reference position and the second measured capacitance at the second reference position to determine a correction amount (610) to be applied to the stored capacitances in the table (630).

2. The MEMS apparatus of claim 1, wherein the capacitive sensing circuit (130) is further configured to determine a current capacitance of the MEMS actuator (110), and further comprising:

a digital signal processor (170) configured to access the table (630) to determine a current position of the moveable mirror (120) based on a combination of the current capacitance of the MEMS actuator (110) and the correction amount (610).

3. MEMS apparatus of claim 1, further comprising:

a light source (300) configured to produce an input beam (I) having a known wavelength and provide the input beam (I) to the interferometer;
the capacitive sensing circuit (130) is further configured to measure a capacitance variation as the moveable mirror (120) moves through at least two zero crossings (710) of an additional interferogram produced by the MEMS interferometer (150) as a result of the input beam (I) and movement of the moveable mirror (120); and
a digital signal processor (170) configured to populate the table (630) based on the capacitance variation and the additional interferogram.

4. The MEMS apparatus of claim 1, wherein:

the table (630) represents an initial capacitance sensing curve;
the calibration module (600) is further configured to compare the first and second measured capacitances of the MEMS actuator to the corresponding respective stored capacitances within the table (630) at the first and second reference positions to calculate respective errors between the first and second measured capacitances and the corresponding stored capacitances within the table (630); and
the calibration module (600) is further configured to extrapolate a corrected capacitance sensing curve using the initial capacitance sensing curve and the calculated errors, the correction amount (610) corresponding to a difference between the corrected capacitance sensing curve and the initial capacitance sensing curve.

5. The MEMS apparatus of claim 1, further comprising:
a wide band light source (800) configured to produce a wide band light beam and provide the wide band light beam to the MEMS interferometer (150) during sensing of the first and second measured capacitances.

6. The MEMS apparatus of claim 5, further comprising:

a narrow band optical filter (302) optically coupled to receive the wide band light beam and configured to produce an input beam having a known wavelength and provide the input beam to the interferometer;
the capacitive sensing circuit (130) is further configured to measure capacitance variation as the moveable mirror (120) moves through at least two zero crossings (710) of an additional interferogram produced by the MEMS interferometer (150) as a result of the input beam (I) and movement of the moveable mirror (120); and
a digital signal processor (170) configured to populate the table (630) based on the capacitance variation and the additional interferogram.

7. The MEMS apparatus of claim 1, wherein:

the capacitive sensing circuit (130) is further configured to sense at least one additional measured capacitance of the MEMS actuator (110) at a respective at least one additional reference position of the moveable mirror (120) corresponding to a respective at least one additional secondary burst of the interferogram produced as a remit of movement of the moveable mirror (120) and the non-planar surface (125); and
the calibration module (600) is further configured to use the first measured capacitance at the first reference position, the second measured capacitance at the second reference position and the at least one additional measured capacitance at the respective at least one additional reference position to determine the correction amount (610).

8. The MEMS apparatus of claim 1, wherein the at least one additional surface includes:

a first offset surface (1604) adjacent to the main surface (1602) on a first end of the first mirror (120), the first offset surface (1604) having a first offset respective to the main surface (1602);
a second offset surface (1606) adjacent to the first offset surface (1604) on the first end of the first mirror (120), the second offset surface (1606) having a second offset respective to the main surface 1602);
a third offset surface (1608) adjacent to the main surface (1602) on a second end of the first mirror (120) opposite the first end, the third offset surface (1608) having a third offset respective to the main surface (1602); and

a fourth offset surface (1610) adjacent to the third offset surface (1608) on the second end of the first mirror (120), the fourth offset surface (1610) having a fourth offset respective to the main surface (1602);
wherein each of the first offset surface (1604), the second offset surface (1606), the third offset surface (1608) and the fourth offset surface (1610) is configured to produce a respective secondary burst (1704, 1706, 1708, 1710) of the interferogram.

9. The MEMS apparatus of claim 1, wherein:

the at least one additional surface comprises an offset surface (1802) offset from the main surface (1804) by an offset amount;
the offset surface (1802) is centered on the first mirror (120) at an optical axis of the interferometer and is configured to produce the secondary burst (1902) of the interferogram;
the main surface (1804) is adjacent the offset surface (1802) on either side thereof and is configured to produce the center burst (1904) of the interferogram.

10. The MEMS apparatus of claim 9, wherein the non-plane surface (125) of the first mirror (120) further includes an additional offset surface (1806) offset from the main surface (1804) by an additional offset amount, the additional offset surface (1806) adjacent the main surface (1804) on either side thereof and configured to produce additional secondary bursts (1908) of the interferogram.

11. The MEMS apparatus of claim 1, wherein:

the at least one additional surface comprises corresponding angled surfaces (2004, 2008) on each side of the main surface (2002) and corresponding reflecting surfaces (2006, 2010) on each side of the main surface (2002);
the main surface (2002) is centered on the first mirror (120) at an optical axis of the interferometer and is configured to produce the center burst (2102) of the interferogram;
the angled surfaces (2004, 2008) are each positioned at a respective angle to the main surface (2002) and configured to reflect light off of a respective one of the reflecting surfaces (2006, 2010) to produce the secondary burst (2104) of the interferogram.

12. The MEMS apparatus of claim 1, wherein the MEMS actuator (110) is an electrostatic actuator having two plates, the capacitive sensing circuit (130) configured to sense the current capacitance between the two plates.

13. The MEMS apparatus of claim 1, wherein the capacitive sensing circuit (130) includes a capacitance-to-voltage converter (200) configured to receive the current capacitance and produce an output voltage proportional to the capacitance.

14. The MEMS apparatus of claim 1, wherein the MEMS interferometer (150) further includes:

a beam splitter (310) optically coupled to receive an incident beam (I) and to split the incident beam (I) into a first interfering beam (L2) and a second interfering beam (L1);
a fixed mirror (320) optically coupled to receive the first interfering beam (L2) and to reflect the first interfering beam (L2) back towards the beam splitter (310) to produce a first reflected interfering beam (L4);
the moveable mirror (120) optically coupled to receive the second interfering beam (L1) and to reflect the second interfering beam (L1) back towards the beam splitter (310) to produce a second reflected interfering beam (L3); and
a detector (330) optically coupled to detect the interferogram produced as a result of interference between the first reflected interfering beam (L4) and the second reflected interfering beam (L3);
wherein the displacement of the moveable mirror (120) produces an optical path length difference between the first and second interfering beams (L2, L1) equal to twice the displacement.

15. The MEMS apparatus of claim 14, wherein the center burst and the secondary burst each correspond to a zero optical path length difference between the first and second interfering beams (L2, L1).

16. A method for calibrating a Micro-Electro-Mechanical System (MEMS) interferometer according to one of claims 1-15, comprising:

producing an interferogram by the MEMS interferometer (150),;

maintaining the table (630) mapping stored capacitances of the MEMS actuator (110) to respective stored positions of the moveable mirror (120);

sensing a first measured capacitance of the MEMS actuator (110) at a first reference position of the moveable mirror (120) corresponding to a center burst of the interferogram;

sensing a second measured capacitance of the MEMS actuator (110) at a second reference position of the moveable mirror (120) corresponding to a secondary burst of the interferogram produced as a remit of the non-planar surface (125); and

determining a correction amount (610) to be applied to the stored capacitances within the table (630) using the first measured capacitance at the first reference position and the second measured capacitance at the second reference position.

17. The method of claim 16, further comprising:

determining a current capacitance of the MEMS actuator (110); and

determining a current position of the moveable mirror (120) based on a combination of the current capacitance of the MEMS actuator (110) and the correction amount (610).

18. The method of claim 16, further comprising:

receiving an input beam (I) having a known wavelength at the MEMS interferometer (150);

measuring a capacitance variation as the moveable mirror (120) moves through at least two zero crossings of an additional interferogram produced by the MEMS interferometer (150) as a result of the input beam (I) and movement of the moveable mirror (120); and

populating the table (630) based on the capacitance variation and the interferogram.

19. The method of claiml6, wherein the table (630) represents an initial capacitance sensing curve, and further comprising;

comparing the first and second measured capacitances of the MEMS actuator (110) to corresponding respective stored capacitances within the table (630) at the first and second reference positions to calculate respective errors between the first and second measured capacitances and the corresponding stored capacitances within the table (630);

extrapolating a corrected capacitance sensing curve using the initial capacitance sensing curve and the calculated errors; and

determining the correction amount (610) as a difference between the corrected capacitance sensing curve and the initial capacitance sensing curve.

20. The method of claiml6, further comprising:

sensing at least one additional measured capacitance of the MEMS actuator (110) at a respective at least ope additional reference position of the moveable mirror (120) corresponding to a respective at least one additional secondary burst of the interferogram produced as a result of movement of the moveable mirror (120) and the non-planar surface (125); and

determining the respective position corrections to be applied to the stored positions within the table (630) using the first measured capacitance at the first reference position, the second measured capacitance at the second reference position and the at least one additional measured capacitance at the respective at least one additional reference position.

21. The method of claiml6, wherein the center burst and the secondary burst each correspond to a zero optical path length difference within the MEMS interferometer as a result of the non-planer surface (125).

**Patentansprüche**

1. Eine mikroelektromechanische Systemvorrichtung (MEMS), die besteht aus:

einem MEMS-Interferometer (150); konfiguriert zur Erzeugung eines Interferogramms, dabei enthält der MEMS-Interferometer (150):

mindestens einen Spiegel optisch gekoppelt zum Empfangen und Reflektieren von Licht, ein erster Spiegel des mindestens einen Spiegels hat dabei eine nicht-planare Oberfläche (125), die nicht-planare Oberfläche (125) umfasst eine Hauptoberfläche (1602, 1804, 2002) und mindestens eine zusätzliche Oberfläche; versetzt gegenüber der Hauptoberfläche (1602, 1804, 2002), wobei die Hauptoberfläche (1602, 1804, 2002) auf dem ersten Spiegel (120) in einer optischen Achse des Interferometers zentriert ist und dazu konfiguriert ist, einen zentralen Burst (1702, 1904, 2102) des Interferogramm zu erzeugen, und wobei die mindestens eine zusätzliche Oberfläche nahe einer Kante des ersten Spiegels (120) angeordnet ist und dazu konfiguriert ist, den sekundären Burst (1706, 1902, 2104) des Interferogramms zu erzeugen; und einen MEMS-Aktuator (110), gekoppelt an einen beweglichen Spiegel (120), um mindestens einen der Spiegel zu bewegen, der MEMS-Aktuator (110) hat dabei eine variable Kapazität;

einen Speicher (620), der eine Tabelle (630) zum Mapping gespeicherter Kapazitäten des MEMS-Aktuators (110) zu entsprechenden gespeicherten Positionen des beweglichen Spiegels (120) enthält;

eine kapazitive Erfassungsschaltung (130), gekoppelt an den MEMS-Aktuator (110), die kapazitive Erfassungsschaltung (130) ist dabei dazu konfiguriert:

eine erste gemessene Kapazität des MEMS-Aktuators (110) an einer ersten Referenzposition des beweglichen Spiegels (120) zu erfassen, die einem zentralen Burst des Interferogramms entspricht, der erzeugt wird als Ergebnis der Bewegung des beweglichen Spiegels (120); und
eine zweite gemessene Kapazität des MEMS-Aktuators (110) an einer zweiten Referenzposition des beweglichen Spiegels (120) zu erfassen, die einem sekundären Burst des Interferogramms entspricht, erzeugt als Ergebnis der Bewegung des beweglichen Spiegels (120) und der nicht-planaren Oberfläche (125); und
ein Kalibrierungsmodul (600), konfiguriert zur Nutzung der ersten gemessenen Kapazität an der ersten Referenzposition und der zweiten gemessenen Kapazität an der zweiten Referenzposition zur Bestimmung eines Korrekturbetrages (610), anzuwenden auf die gespeicherten Kapazitäten in der Tabelle (630).

2. Die MEMS-Vorrichtung nach Anspruch 1, wobei die kapazitive Erfassungsschaltung (130) weiterhin dazu konfiguriert ist, eine aktuelle Kapazität des MEMS-Aktuators (110) zu bestimmen, und die außerdem umfasst:
einen digitalen Signalprozessor (170), dazu konfiguriert, auf die Tabelle (630) zuzugreifen, um die aktuelle Position des beweglichen Spiegels (120) auf Basis einer Kombination der aktuellen Kapazität des MEMS-Aktuators (110) und des Korrekturbetrages (610) zu bestimmen.

3. MEMS-Vorrichtung nach Anspruch 1, weiterhin umfassend:

eine Lichtquelle (300), konfiguriert zur Erzeugung eines Eingangsstrahls (I) mit einer bekannten Wellenlänge und um den Eingangsstrahl (I) zum Interferometer zu lenken;
die kapazitive Erfassungsschaltung (130) ist weiterhin dazu konfiguriert, eine Kapazitätsschwankung zu messen, wenn sich der bewegliche Spiegel (120) durch mindestens zwei Nulldurchgänge (710) eines zusätzlichen Interferogramms bewegt, das vom MEMS-Interferometer (150) erzeugt wird, als Ergebnis des Eingangsstrahls (I) und der Bewegung des beweglichen Spiegels (120); und
ein digitaler Signalprozessor (170), konfiguriert zur Bestückung der Tabelle (630) auf Basis der Kapazitätsvariation und des zusätzlichen Interferogramms.

4. Die MEMS-Vorrichtung nach Anspruch 1, wobei:

die Tabelle (630) eine anfängliche Kapazitätserfassungskurve darstellt;
das Kalibrierungsmodul (600) weiterhin dazu konfiguriert ist, die erste und die zweite gemessene Kapazität des MEMS-Aktuators mit den entsprechenden gespeicherten Kapazitäten in der Tabelle (630) an der ersten und zweiten Referenzposition zu vergleichen, um die jeweiligen Fehler zwischen der ersten und zweite gemessenen Kapazität und der entsprechenden gespeicherten Kapazität in der Tabelle (630) zu berechnen; und
das Kalibrierungsmodul (600) weiterhin dazu konfiguriert ist, eine korrigierte Kapazitätserfassungskurve zu extrapolieren, unter Verwendung der anfänglichen Kapazitätserfassungskurve und der berechneten Fehler, der Korrekturbetrag (610) entspricht dabei der Differenz zwischen der korrigierten Kapazitätserfassungskurve und der anfänglichen Kapazitätserfassungskurve.

5. MEMS-Vorrichtung nach Anspruch 1, weiterhin umfassend:
eine Breitband- Lichtquelle (800) konfiguriert zur Erzeugung eines Breitband-Lichtstrahls und um den Breitband-Lichtstrahls während der Erfassung der ersten und zweiten gemessenen Kapazität auf den MEMS-Interferometer (150) zu lenken.

6. MEMS-Vorrichtung nach Anspruch 5, weiterhin umfassend:

einen optischen Schmalband- Filter (302), optisch gekoppelt zum Empfangen des Breitband- Lichtstrahls und dazu konfiguriert, einen Eingangsstrahl mit einer bekannten Wellenlänge zu erzeugen und den Eingangsstrahl zum Interferometer zu lenken;

die kapazitive Erfassungsschaltung (130) ist weiterhin dazu konfiguriert, eine Kapazitätsschwankung zu messen, wenn sich der bewegliche Spiegel (120) durch mindestens zwei Nulldurchgänge (710) eines zusätzlichen Interferogramms bewegt, das vom MEMS-Interferometer (150) erzeugt wird, als Ergebnis des Eingangsstrahls (I) und der Bewegung des beweglichen Spiegels (120); und

einen digitalen Signalprozessor (170), konfiguriert zur Bestückung der Tabelle (630) auf Basis der Kapazitätsvariation und des zusätzlichen Interferogramms.

7. Die MEMS-Vorrichtung nach Anspruch 1, wobei:

die kapazitive Erfassungsschaltung (130) weiterhin dazu konfiguriert ist, mindestens eine zusätzlich gemessene Kapazität des MEMS-Aktuators (110) an mindestens einer zusätzlichen Referenzposition des beweglichen Spiegels (120) zu erfassen, die einem jeweiligen mindestens einen zusätzlichen Burst des Interferogramms entspricht, erzeugt als Verweis der Bewegung des beweglichen Spiegels (120) und der nicht-planaren Oberfläche (125); und

das Kalibrierungsmodul (600) weiterhin dazu konfiguriert ist, die erste gemessene Kapazität an der ersten Referenzposition, die zweite gemessene Kapazität an der zweiten Referenzposition und die mindestens eine zusätzliche gemessene Kapazität an der jeweiligen mindestens einen zusätzlichen Referenzposition zu nutzen, um den Korrekturbetrag (610) zu bestimmen.

8. Die MEMS-Vorrichtung nach Anspruch 1, wobei die mindestens eine zusätzliche Oberfläche beinhaltet:

eine erste versetzte Fläche (1604), angrenzend an die Hauptoberfläche (1602) an einem ersten Ende des ersten Spiegels (120), die erste versetzte Fläche (1604) weist dabei einen ersten Versatz bezogen auf die Hauptoberfläche (1602) auf;

eine zweite versetzte Fläche (1606), angrenzend an die erste versetzte Fläche (1604) an einem ersten Ende des ersten Spiegels (120), die zweite versetzte Fläche (1606) weist dabei einen zweiten Versatz bezogen auf die Hauptoberfläche (1602) auf;

eine dritte versetzte Fläche (1608), angrenzend an die Hauptoberfläche (1602) an einem zweiten Ende des ersten Spiegels (120), gegenüber dem ersten Ende, die dritte versetzte Fläche (1608) weist dabei einen dritten Versatz bezogen auf die Hauptoberfläche (1602) auf; und

eine vierte versetzte Fläche (1610), angrenzend an die dritte versetzte Fläche (1608), an einem zweiten Ende des ersten Spiegels (120), die vierte versetzte Fläche (1610) weist dabei einen vierten Versatz bezogen auf die Hauptoberfläche (1602) auf; wobei sowohl die erste versetzte Fläche (1604), die zweite versetzte Fläche (1606), die dritte versetzte Fläche (1608) und die vierte versetzte Fläche (1610) dazu konfiguriert sind, einen jeweiligen sekundären Burst (1704, 1706, 1708, 1710) des Interferogramms zu erzeugen.

9. Die MEMS-Vorrichtung nach Anspruch 1, wobei:

die mindestens eine zusätzliche Oberfläche eine versetzte Fläche (1802) umfasst, versetzt gegenüber der Hauptoberfläche (1804) durch einen Versatzbetrag;

die versetzte Fläche (1802) auf dem ersten Spiegel (120) an einer optischen Achse des Interferometers zentriert ist und dazu konfiguriert ist, den sekundären Burst (1902) des Interferogramms zu erzeugen;

die Hauptoberfläche (1804) liegt neben der versetzten Fläche (1802) auf jeder ihrer Seiten und ist dazu konfiguriert, den zentralen Burst (1904) des Interferogramms zu erzeugen.

10. Die MEMS-Vorrichtung nach Anspruch 9, wobei die nicht planare Oberfläche (125) des ersten Spiegels (120) weiterhin eine zusätzliche versetzte Fläche (1806) enthält, versetzt gegenüber der Hauptoberfläche (1804) durch einen zusätzlichen Versatzbetrag, die zusätzliche versetzte Fläche (1806) grenzt an die Hauptoberfläche (1804) auf ihren beiden Seiten und ist dazu konfiguriert, einen zusätzlichen sekundären Burst (1908) des Interferogramms zu erzeugen.

11. Die MEMS-Vorrichtung nach Anspruch 1, wobei:

die mindestens eine zusätzliche Oberfläche entsprechende abgewinkelte Flächen (2004, 2008) auf jeder Seite der Hauptoberfläche (2002) enthält sowie entsprechende reflektierende Flächen (2006, 2010) auf jeder Seite der Hauptoberfläche (2002);

die Hauptoberfläche (2002) auf dem ersten Spiegel (120) an einer optischen Achse des Interferometers zentriert ist und sie dazu konfiguriert ist, den zentralen Burst (2102) des Interferogramms zu erzeugen;

die abgewinkelten Flächen (2004, 2008) jeweils in einem entsprechenden Winkel zur Hauptoberfläche (2002) positioniert sind und dazu konfiguriert sind, Light- off einer entsprechenden reflektierenden Fläche (2006, 2010) zu reflektieren, um den sekundären Burst (2104) des Interferogramms zu erzeugen.

12. Die MEMS-Vorrichtung nach Anspruch 1, wobei der MEMS-Aktuator (110) ein elektrostatischer Aktuator ist, mit zwei Platten, die kapazitive Erfassungsschaltung (130) ist dazu konfiguriert, die aktuelle Kapazität zwischen den beiden Platten zu erfassen.

13. Die MEMS-Vorrichtung nach Anspruch 1, wobei die kapazitive Erfassungsschaltung (130) einen kapazitiven Spannungswandler (200) enthält, konfiguriert zum Empfang der aktuellen Kapazität und zur Erzeugung einer Ausgangsspannung proportional zur Kapazität.

14. Die MEMS-Vorrichtung nach Anspruch 1, wobei der MEMS-Interferometer (150) weiterhin beinhaltet:

ein Strahlteiler (310), optisch gekoppelt zum Empfang eines einfallenden Strahls (I) und zur Teilung des einfallenden Strahls (I) in einen ersten interferierenden Strahl (L2) und einen zweiten interferierenden Strahl (L1);

ein fester Spiegel (320), optisch gekoppelt zum Empfang des ersten interferierenden Strahls (L2) und zur Reflektion des ersten interferierenden Strahls (L2) zurück zum Strahlteiler (310), um einen ersten reflektierten interferierenden Strahl (L4) zu erzeugen;

der bewegliche Spiegel (120) optisch gekoppelt zum Empfang des zweiten interferierenden Strahls (L1) und zur Reflektion des zweiten interferierenden Strahls (L1) zurück zum Strahlteiler (310), um einen zweiten reflektierten interferierenden Strahl (L3) zu erzeugen; und

ein Detektor (330) optisch gekoppelt zur Erkennung des Interferogramms, das als Ergebnis der Interferenz zwischen dem ersten reflektierten interferierenden Strahl (L4) und dem zweiten reflektierten interferierenden Strahl (L3) erzeugt wird;

wobei die Bewegung des beweglichen Spiegels (120) eine optische Pfadlängendifferenz zwischen dem ersten und dem zweiten interferierenden Strahl (L2, L1) erzeugt die gleich dem Doppelten der Bewegung ist.

15. MEMS-Vorrichtung nach Anspruch 14, wobei der zentrale Burst und der sekundäre Burst jeweils einer optischen Pfadlängendifferenz Null zwischen dem ersten und dem zweiten interferierender Strahl (L2, L1) entsprechen.

16. Verfahren zur Kalibrierung eines Micro-Electro-Mechanical System (MEMS)-Interferometers nach irgendeinem der Ansprüche 1-15, das umfasst:

Erzeugung eines Interferogramm durch den MEMS-Interferometer (150);

Pflege der Tabelle (630) zum Mapping gespeicherter Kapazitäten des MEMS-Aktuators (110) zu jeweiligen gespeicherten Positionen des beweglichen Spiegels (120);

Erfassung einer ersten gemessenen Kapazität des MEMS-Aktuators (110) an einer ersten Referenzposition des beweglichen Spiegels (120), die einem zentralen Burst des Interferogramms, erzeugt als Ergebnis er nichtplanaren Oberfläche (125), entspricht,

Erfassung einer zweiten gemessenen Kapazität des MEMS-Aktuators (110) an einer zweiten Referenzposition des beweglichen Spiegels (120), die einem sekundären Burst des Interferogramms entspricht; und

Bestimmung eines Korrekturbetrages (610) der auf die gespeicherten Kapazitäten innerhalb der Tabelle (630) anzuwenden ist, unter Nutzung der ersten gemessenen Kapazität an der ersten Referenzposition und der zweiten gemessenen Kapazität an der zweiten Referenzposition.

17. Die Methode gemäß Anspruch 16, die weiterhin umfasst:

Bestimmung einer aktuellen Kapazität des MEMS-Aktuators (110); und

Bestimmung einer aktuellen Position des beweglichen Spiegels (120), auf Basis einer Kombination der aktuellen Kapazität des MEMS-Aktuators (110) und des Korrekturbetrages (610).

18. Die Methode gemäß Anspruch 16, die weiterhin umfasst:

Empfang eines Eingangsstrahls (I) mit einer bekannten Wellenlänge am MEMS-Interferometer (150);

Messung einer Kapazitätsschwankung, wenn sich der bewegliche Spiegel (120) durch mindestens zwei Nulldurchgänge eines zusätzlichen Interferogramms bewegt, das vom MEMS-Interferometer (150) erzeugt wird, als Ergebnis des Eingangsstrahls (I) und der Bewegung des beweglichen Spiegels (120); und

Bestückung der Tabelle (630) auf Basis der Kapazitätsvariation und des zusätzlichen Interferogramms.

19. Verfahren nach Anspruch 16, wobei die Tabelle (630) eine anfängliche Kapazitätserfassungskurve repräsentiert und weiterhin umfassend;

Vergleich der ersten und zweiten gemessenen Kapazität des MEMS-Aktuators (110) mit den jeweiligen gespeicherten Kapazitäten in der Tabelle (630) an der ersten und zweiten Referenzposition, um die jeweiligen Fehler zwischen der ersten und zweite gemessenen Kapazität und der entsprechenden gespeicherten Kapazität in der Tabelle (630) zu berechnen;

Extrapolation der korrigierten Kapazitätserfassungskurve unter Verwendung der anfänglichen Kapazitätserfassungskurve und der berechneten Fehler, und

Bestimmung des Korrekturbetrages (610) als der Differenz zwischen der korrigierten Kapazitätserfassungskurve und der anfänglichen Kapazitätserfassung skurve.

20. Die Methode gemäß Anspruch 16, die weiterhin umfasst:

mindestens eine zusätzliche gemessene Kapazität des MEMS-Aktuators (110) an mindestens einer zusätzlichen Referenzposition des beweglichen Spiegels (120) zu erfassen, die einem jeweiligen mindestens einen zusätzlichen Burst des Interferogramms entspricht, erzeugt als Verweis der Bewegung des beweglichen Spiegels (120) und der nicht-planaren Oberfläche (125) und

Bestimmung der jeweilig Positionskorrektur, die an den gespeicherten Positionen in der Tabelle (630) vorzunehmen ist, unter Verwendung der ersten gemessenen Kapazität an der ersten Referenzposition, der zweiten gemessenen Kapazität an der zweiten Referenzposition und mindestens eine zusätzliche gemessene Kapazität an der jeweiligen mindestens einen zusätzlichen Referenzposition.

21. Verfahren nach Anspruch 16, wobei der zentrale Burst und der sekundäre Burst jeweils einer optischen Pfadlängendifferenz Null innerhalb des MEMS-Interferometers als Ergebnis der nicht-planaren Oberfläche (125) entsprechen.

## Revendications

1. Appareil à microsystème électromécanique (MEMS), comprenant :

un interféromètre de MEMS (150) configuré pour produire un interférogramme, l'interféromètre de MEMS (150) comprenant :

au moins un miroir couplé optiquement pour recevoir et réfléchir la lumière, un premier miroir du ou des miroirs ayant une surface non plane (125), la surface non plane (125) comprenant une surface principale (1602, 1804, 2002) et au moins une surface supplémentaire décalée par rapport à la surface principale (1602, 1804, 2002), dans lequel la surface principale (1602, 1804, 2002) est centrée sur le premier miroir (120) au niveau d'un axe optique de l'interféromètre et est configurée pour produire une rafale centrale (1702, 1904, 2102) de l'interférogramme, et la au moins une surface supplémentaire est située près d'un bord du premier miroir (120) et étant configurées pour produire la rafale secondaire (1706, 1902, 2104) de l'interférogramme ; et

un actionneur de MEMS (110) couplé à un miroir mobile (120) du au moins un miroir pour produire un déplacement de celui-ci, l'actionneur de MEMS (110) ayant une capacité variable ;

une mémoire (620) conservant une table (630) mappant des capacités stockées de l'actionneur de MEMS (110) par rapport à des positions stockées respectives du miroir mobile (120) ;

un circuit de détection capacitif (130) couplé à l'actionneur de MEMS (110), le circuit de détection capacitif (130) étant configuré pour :

détecter une première capacité mesurée de l'actionneur de MEMS (110) dans une première position de référence du miroir mobile (120) correspondant à une rafale centrale de l'interférogramme produite en résultat du déplacement du miroir mobile (120) ; et

détecter une seconde capacité mesurée de l'actionneur de MEMS (110) dans une seconde position de référence du miroir mobile (120) correspondant à une rafale secondaire de l'interférogramme produite en résultat du miroir mobile (120) et de la surface non plane (125) ; et

un module d'étalonnage (600) configuré pour utiliser la première capacité mesurée dans la première position de référence et la seconde capacité mesurée dans la seconde position de référence afin de déterminer une quantité de correction (610) à appliquer aux capacités stockées dans la table (630).

2. Appareil à MEMS selon la revendication 1, dans lequel le circuit de détection capacitif (130) est en outre configuré pour déterminer une capacité de courant de l'actionneur de MEMS (110), et comprenant en outre :

un processeur de signal numérique (170) configuré pour accéder à la table (630) afin de déterminer une position actuelle du miroir mobile (120) sur la base d'une combinaison de la capacité de courant de l'actionneur de MEMS (110) et de la quantité de correction (610).

3. Appareil à MEMS selon la revendication 1, comprenant en outre :

une source de lumière (300) configurée pour produire un faisceau d'entrée (1) ayant une longueur d'onde connue et fournir le faisceau d'entrée (1) à l'interféromètre ;

le circuit de détection capacitif (130) est en outre configuré pour mesurer une variation de capacité lorsque le miroir mobile (120) se déplace à travers au moins deux passages par zéro (710) d'un interférogramme supplémentaire produit par l'interféromètre de MEMS (150) en conséquence du faisceau d'entrée (1) et du déplacement du miroir mobile (120) ; et

un processeur de signal numérique (170) configuré pour remplir la table (630) sur la base de la variation de capacité et de l'interférogramme supplémentaire.

4. Appareil à MEMS selon la revendication 1, dans lequel :

la table (630) représente une courbe de détection de capacité initiale ;

le module d'étalonnage (600) est en outre configuré pour comparer les première et seconde capacités mesurées de l'actionneur de MEMS aux capacités stockées respectives correspondantes dans la table (630) dans les première et seconde positions de référence afin de calculer des erreurs respectives entre les première et seconde capacités mesurées et les capacités stockées correspondantes dans la table (630) ; et

le module d'étalonnage (600) est en outre configuré pour extrapoler une courbe de détection de capacité corrigée en utilisant la courbe de détection de capacité initiale et les erreurs calculées, la quantité de correction (610) correspondant à une différence entre la courbe de détection de capacité corrigée et la courbe de détection de capacité initiale.

5. Appareil à MEMS selon la revendication 1, comprenant en outre :
une source de lumière à large bande (800) configurée pour produire un faisceau de lumière à large bande et fournir le faisceau de lumière à large bande à l'interféromètre de MEMS (150) pendant la détection des première et seconde capacités mesurées.

6. Appareil à MEMS selon la revendication 5, comprenant en outre :

un filtre optique à bande étroite (302) couplé optiquement pour recevoir le faisceau de lumière à large bande et configuré pour produire un faisceau d'entrée ayant une longueur d'onde connue et fournir le faisceau d'entrée à l'interféromètre ;

le circuit de détection capacitif (130) est en outre configuré pour mesurer la variation de capacité lorsque le miroir mobile (120) se déplace à travers au moins deux passages par zéro (710) d'un interférogramme supplémentaire produit par l'interféromètre de MEMS (150) en résultat du faisceau d'entrée (1) et du déplacement du miroir mobile (120) ; et

un processeur de signal numérique (170) configuré pour remplir la table (630) sur la base de la variation de capacité et de l'interférogramme supplémentaire.

7. Appareil à MEMS selon la revendication 1, dans lequel :

le circuit de détection capacitif (130) est en outre configuré pour détecter au moins une capacité mesurée supplémentaire de l'actionneur de MEMS (110) au niveau d'au moins une position de référence supplémentaire respective du miroir mobile (120) correspondant à au moins une rafale secondaire supplémentaire respective de l'interférogramme produite en tant que conséquence de déplacement du miroir mobile (120) et de la surface non plane (125) ; et

le module d'étalonnage (600) est en outre configuré pour utiliser la première capacité mesurée au niveau de la première position de référence, la seconde capacité mesurée au niveau de la seconde position de référence et la au moins une capacité mesurée supplémentaire au niveau de la au moins une position de référence supplémentaire respective pour déterminer la quantité de correction (610).

8. Appareil à MEMS selon la revendication 1, dans lequel la au moins une surface supplémentaire comprend :

une première surface décalée (1604) adjacente à la surface principale (1602) sur une première extrémité du premier miroir (120), la première surface décalée (1604) ayant un premier décalage respectif par rapport à la surface principale (1602) ;
une deuxième surface décalée (1606) adjacente à la première surface décalée (1604) sur la première extrémité du premier miroir (120), la deuxième surface décalée (1606) ayant un deuxième décalage respectif par rapport à la surface principale 1602);
une troisième surface décalée (1608) adjacente à la surface principale (1602) sur une seconde extrémité du premier miroir (120) opposée à la première extrémité, la troisième surface décalée (1608) ayant un troisième décalage respectif par rapport à la surface principale (1602) ; et
une quatrième surface décalée (1610) adjacente à la troisième surface décalée (1608) sur la seconde extrémité du premier miroir (120), la quatrième surface décalée (1610) ayant un quatrième décalage respectif par rapport à la surface principale (1602) ;
dans lequel chacune de la première surface décalée (1604), de la deuxième surface décalée (1606), de la troisième surface décalée (1608) et de la quatrième surface décalée (1610) est configurée pour produire une rafale secondaire respective (1704, 1706, 1708, 1710) de l'interférogramme.

9. Appareil à MEMS selon la revendication 1, dans lequel :

la au moins une surface supplémentaire comprend une surface décalée (1802) qui est décalée par rapport à la surface principale (1804) d'une quantité de décalage ;
la surface décalée (1802) est centrée sur le premier miroir (120) au niveau d'un axe optique de l'interféromètre et est configurée pour produire la rafale secondaire (1902) de l'interférogramme ;
la surface principale (1804) est adjacente à la surface décalée (1802) de chaque côté de celle-ci et est configurée pour produire la rafale centrale (1904) de l'interférogramme.

10. Appareil à MEMS selon la revendication 9, dans lequel la surface non plane (125) du premier miroir (120) comprend en outre une surface décalée supplémentaire (1806) qui est décalée par rapport à la surface principale (1804) d'une quantité de décalage supplémentaire, la surface décalée supplémentaire (1806) étant adjacente à la surface principale (1804) de chaque côté de celle-ci et configurée pour produire des rafales secondaires supplémentaires (1908) de l'interférogramme.

11. Appareil à MEMS selon la revendication 1, dans lequel :

la au moins une surface supplémentaire comprend des surfaces inclinées correspondantes (2004, 2008) de chaque côté de la surface principale (2002) et des surfaces réfléchissantes correspondantes (2006, 2010) de chaque côté de la surface principale (2002) ;
la surface principale (2002) est centrée sur le premier miroir (120) au niveau d'un axe optique de l'interféromètre et est configurée pour produire la rafale centrale (2102) de l'interférogramme ;
les surfaces inclinées (2004, 2008) sont chacune positionnées au niveau d'un angle respectif par rapport à la surface principale (2002) et configurées pour réfléchir la lumière à partir d'une respective parmi les surfaces réfléchissantes (2006, 2010) pour produire la rafale secondaire (2104) de l'interférogramme.

12. Appareil à MEMS selon la revendication 1, dans lequel l'actionneur de MEMS (110) est un actionneur électrostatique ayant deux plaques, le circuit de détection capacitive (130) étant configuré pour détecter la capacité de courant entre les deux plaques.

13. Appareil à MEMS selon la revendication 1, dans lequel le circuit de détection capacitif (130) comprend un convertisseur de capacité en tension (200) configuré pour recevoir la capacité de courant et produire une tension de sortie proportionnelle à la capacité.

14. Appareil à MEMS selon la revendication 1, dans lequel l'interféromètre de MEMS (150) comprend en outre :

un diviseur de faisceau (310) couplé optiquement pour recevoir un faisceau incident (I) et pour diviser le faisceau incident (I) en un premier faisceau d'interférence (L2) et un second faisceau d'interférence (L1) ;

un miroir fixe (320) couplé optiquement pour recevoir le premier faisceau d'interférence (L2) et pour réfléchir le premier faisceau d'interférence (L2) en arrière vers le diviseur de faisceau (310) afin de produire un premier faisceau d'interférence réfléchi (L4) ;

le miroir mobile (120) couplé optiquement pour recevoir le second faisceau d'interférence (L1) et pour réfléchir le second faisceau d'interférence (L1) en arrière vers le diviseur de faisceau (310) afin de produire un second faisceau d'interférence réfléchi (L3) ; et

un détecteur (330) couplé optiquement pour détecter l'interférogramme produit en résultat d'une interférence entre le premier faisceau d'interférence réfléchi (L4) et le second faisceau d'interférence réfléchi (L3) ;

dans lequel le déplacement du miroir mobile (120) produit une différence de longueur de trajet optique entre les premier et second faisceaux d'interférence (L2, L1) égale au double du déplacement.

15. Appareil à MEMS selon la revendication 14, dans lequel la rafale centrale et la rafale secondaire correspondent chacune à une différence de longueur de trajet optique nulle entre les premier et second faisceaux d'interférence (L2, L1).

16. Procédé d'étalonnage d'un interféromètre de microsystème électromécanique (MEMS) selon l'une des revendications 1 à 15, comprenant les étapes consistant à :

produire un interférogramme par l'intermédiaire de l'interféromètre de MEMS (150) ;

conserver la table (630) mappant des capacités stockées de l'actionneur de MEMS (110) par rapport à des positions stockées respectives du miroir mobile (120) ;

détecter une première capacité mesurée de l'actionneur de MEMS (110) dans une première position de référence du miroir mobile (120) correspondant à une rafale centrale de l'interférogramme ;

détecter une seconde capacité mesurée de l'actionneur de MEMS (110) dans une seconde position de référence du miroir mobile (120) correspondant à une rafale secondaire de l'interférogramme produite en tant que conséquence de la surface non plane (125) ; et

déterminer une quantité de correction (610) à appliquer aux capacités stockées dans la table (630) en utilisant la première capacité mesurée dans la première position de référence et la seconde capacité mesurée dans la seconde position de référence.

17. Procédé selon la revendication 16, comprenant en outre les étapes consistant à :

déterminer une capacité de courant de l'actionneur de MEMS (110) ; et

déterminer une position actuelle du miroir mobile (120) sur la base d'une combinaison de la capacité actuelle de l'actionneur de MEMS (110) et de la quantité de correction (610).

18. Procédé selon la revendication 16, comprenant en outre les étapes consistant à :

recevoir un faisceau d'entrée (1) ayant une longueur d'onde connue au niveau de l'interféromètre de MEMS (150) ;

mesurer une variation de capacité lorsque le miroir mobile (120) se déplace à travers au moins deux passages par zéro d'un interférogramme supplémentaire produit par l'interféromètre de MEMS (150) en résultat du faisceau d'entrée (1) et du déplacement du miroir mobile (120) ; et

remplir la table (630) sur la base de la variation de capacité et de l'interférogramme.

19. Procédé selon la revendication 6, dans lequel la table (630) représente une courbe de détection de capacité initiale, et comprenant en outre les étapes consistant à :

comparer les première et seconde capacités mesurées de l'actionneur de MEMS (110) à des capacités stockées respectives correspondantes dans la table (630) dans les première et seconde positions de référence afin de calculer des erreurs respectives entre les première et seconde capacités mesurées et les capacités stockées correspondantes dans la table (630) ;

extrapoler une courbe de détection de capacité corrigée en utilisant la courbe de détection de capacité initiale et les erreurs calculées ; et

déterminer la quantité de correction (610) en tant que différence entre la courbe de détection de capacité corrigée et la courbe de détection de capacité initiale.

**20.** Procédé selon la revendication 16, comprenant en outre les étapes consistant à :

détecter au moins une capacité mesurée supplémentaire de l'actionneur de MEMS (110) dans au moins une position de référence supplémentaire respective du miroir mobile (120) correspondant à au moins une rafale secondaire supplémentaire respective de l'interférogramme produite en résultat du déplacement du miroir mobile (120) et de la surface non plane (125) ; et

déterminer les corrections de position respectives à appliquer aux positions stockées dans la table (630) en utilisant la première capacité mesurée dans la première position de référence, la seconde capacité mesurée dans la seconde position de référence et la au moins une capacité mesurée supplémentaire dans la au moins une position de référence supplémentaire respective.

**21.** Procédé selon la revendication 16, dans lequel la rafale centrale et la rafale secondaire correspondent chacune à une différence de longueur de trajet optique nulle à l'intérieur de l'interféromètre de MEMS en résultat de la surface non plane (125).

100

130

CAPACITIVE
SENSING CIRCUIT

MOVING
MIRROR
120

MEMS
ACTUATOR
110

## FIG. 1

130 — CAPACITIVE
SENSING CIRCUIT

105

MEMS INTERFEROMETER

MEMS
ACTUATOR
110

MOVING
MIRROR
120

INTERFEROMETER
140

150

## FIG. 2

105

160

MEMS
INTERFEROMETER
150

OPTICAL
INTERFERENCE PATTERN
195

CAP SENSE
190

ACTUATION
180

ASIC

CSC

130

DSP
170

## FIG. 3

22

**FIG. 4**

**FIG. 5**

**FIG. 6**

FIG. 7

150    400

160

MEMS

ASIC

PACKAGE

**FIG. 8**

500

| 510 | PROVIDE MEMS ACTUATOR WITH VARIABLE CAPACITANCE COUPLED TO MOVEABLE MIRROR |
| 520 | DISPLACE MOVEABLE MIRROR USING MEMS ACTUATOR |
| 530 | SENSE CAPACITANCE OF MEMS ACTUATOR |
| 540 | DETERMINE POSITION OF MOVEABLE MIRROR BASED ON CAPACITANCE OF MEMS ACTUATOR |

**FIG. 9**

FIG. 10

EP 3 390 991 B1

TWO CONSECUTIVE
ZERO CROSSINGS 710

**FIG. 11A**

**FIG. 11B**

**FIG. 12A**

**FIG. 12B**

FIG. 13

**FIG. 14**

FIG. 15

## FIG. 16

## FIG. 17

**FIG. 18**

**FIG. 19A**

**FIG. 19B**

**FIG. 20**

**FIG. 21A**

**FIG. 21B**

**FIG. 22**

| PROVIDE MIRROR WITH NON-PLANAR SURFACE IN INTERFEROMETER | 2310 |

| MAINTAIN TABLE MAPPING CAPACITANCE OF MEMS ACTUATOR TO POSITIONS OF MIRROR | 2320 |

| SENSE FIRST MEASURED CAPACITANCE AT FIRST REFERENCE POSITION CORRESPONDING TO CENTER BURST OF INTERFEROGRAM | 2330 |

| SENSE SECOND MEASURED CAPACITANCE AT SECOND REFERENCE POSITION CORRESPONDING TO SECONDARY BURST OF INTERFEROGRAM BASED ON NON-PLANAR SURFACE | 2340 |

| DETERMINE CORRECTION AMOUNT TO BE APPLIED TO STORED CAPACITANCES IN TABLE BASED ON MEASURED CAPACITANCES | 2350 |

**FIG. 23**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014139839 A